# EUROPEAN PATENT APPLICATION

(11) **EP 2 560 287 A1**
(43) Date of publication of application: **20.02.2013**
(21) Application number: 11789654.8
(22) Date of filing: 24.05.2011
(51) Int. Cl.: H04B 1/16, H04H 20/57, H04H 20/61, H04H 40/27, H04H 60/42, H04H 60/43, H04H 60/46, H04H 60/51, H04H 60/65, H04N 5/44, H04N 7/173

(54) **RECEPTION DEVICE, RECEPTION METHOD, AND PROGRAM**

(30) Priority: 31.05.2010 JP 2010125233
(71) Applicant: Sony Corporation, Tokyo 108-0075 (JP)
(72) Inventor: KITAZATO Naohisa, Tokyo 108-0075 (JP)
(74) Representative: Robinson, Nigel Alexander Julian
(86) International application number: PCT/JP2011/061835
(87) International publication number: WO 2011/152245

(57) **Abstract**

The present invention relates to a receiving device, a receiving method, and a program that can promptly present receivable one-seg broadcast to the user so that the user may easily discovers the user's desired broadcast. A station information acquiring unit (111) acquires station information including broadcasting area information on a broadcasting area capable of receiving a broadcast wave from a station which broadcasts arbitrary one-seg broadcast through an arbitrary segment, and a registering unit (114) causes only station information requested to be registered by the user to be stored in a storage unit (115). A station selecting unit (117) selects a station that broadcasts one-seg broadcast receivable at a predetermined position as a channel-selectable station whose channels are selectable by using the broadcasting area information included in the station information stored in the storage unit (115), and a channel selection control unit (118) carries out channel selection control of selecting the one-seg broadcast of the channel-selectable station. The present invention is applicable to a portable one-seg broadcast receiving terminal, for example.

## Description

### TECHNICAL FIELD

The present invention relates to a receiving device, a receiving method, and a program, and more particularly to a receiving device, a receiving method, and a program which can promptly present receivable one-segment broadcast.

### BACKGROUND ART

In terrestrial digital broadcasting, an about 6-MHz frequency band (hereinafter, referred to as a physical channel) of a UHF (Ultra High Frequency) band is divided into 13 segments. Broadcasting for fixed terminals, such as television receivers, is carried out using 12 segments among them. With the remaining one segment, broadcasting for mobile terminals is carried out. That is, one segment broadcast (hereinafter one-seg broadcast) is carried out.

In the one-seg broadcast being carried out currently for mobile terminals, the same contents as the broadcasting programs for fixed terminals are broadcast, and a segment at the center (that is, the seventh segment in ascending order of frequency) among the 13 segments of a physical channel is used.

Here, the one-seg broadcast which is currently carried out using the segment at the center (hereinafter, referred to as central segment) is also called "regular one-seg broadcast".

After complete shifting to terrestrial digital broadcasting from terrestrial analog broadcasting, the terrestrial digital broadcasting will be carried out by using physical channels, named channels 13 through 52, of a UHF band.

However, in many regions, not all of the channels 13 through 52 are actually used for the terrestrial digital broadcasting. Therefore, there are unassigned channels which are physical channels unused for the terrestrial digital broadcasting.

How to use the unassigned channels effectively is now being studied. Carrying out the one-seg broadcast using an arbitrary segment of the unassigned channel is examined as one of the methods.

Here, since a physical channel for the terrestrial digital broadcasting has 13 segments, at most 13 services of the one-seg broadcast can be carried out through one physical channel. A plurality of services of the one-seg broadcast using each of a plurality of segments out of the 13 segments of one physical channel is called multi-segment broadcast.

The one-seg broadcast carried out using one or more arbitrary segments selected from among the 13 segments is also called arbitrary one-seg broadcast, and the multi-segment broadcast falls under the category of the arbitrary one-seg broadcast.

In a conventional receiving terminal (hereinafter, referred to as a regular one-seg terminal) which receives the regular one-seg broadcast, in order that the user may select a channel of the regular one-seg broadcast, channel scanning is carried out to acquire channel selection information which is information concerning selection of channels, such as a frequency, and then a table of channel selection information (hereinafter, referred to as a channel selection table) is created (refer to Patent Documents 1 and 2).

In scanning channels by the regular one-seg terminal, when the central segment of each physical channel of terrestrial digital broadcasting is selected and TS (Transport Stream) is able to be received through the central segment, NIT (Network Information Table) which is a table containing frequency information for every service, used to tune in the carrier with which the service is transmitted, and information on the corresponding service, and SDT (Service Description Table) which is a table containing meta information (service name, etc.) of each service, are extracted from the TS, and a channel selection table is created from the NIT and SDT.

Even when a receiving terminal which receives the arbitrary one-seg broadcast is realized, it is necessary to create the channel selection table like in the case of the regular one-seg terminal.

However, since the arbitrary one-seg broadcast is carried out through arbitrary segments of the 13 segments of a physical channel, simply, it is necessary to tune in not only to the central segment of each physical channel but also to all the 13 segments in scanning channels. This requires huge time as compared with the channel scanning performed in the regular one-seg terminal.

For this reason, proposal of a method of scanning channels quickly (in a short time) for the arbitrary one-seg broadcast is demanded.

### CITATION LIST

### PATENT DOCUMENTS

Patent Document 1: Japanese Patent Application Laid-Open Publication No. 2006-325032
Patent Document 2: Japanese Patent Application Laid-Open Publication No. 2007-329847

### SUMMARY OF THE INVENTION

### PROBLEMS TO BE SOLVED BY THE INVENTION

Incidentally, arbitrary one-seg broadcast (hereinafter, referred to as area limited broadcast) is proposed in which an area of several tens of meters to several kilometers centering on a station (antenna) which is a transmitting device, which transmits a broadcast wave of the arbitrary one-seg broadcast, is set as a broadcasting area within which (the broadcast wave) of the arbitrary one-seg broadcast is receivable.

Since the area limited broadcast falls under the category of the arbitrary one-seg broadcast, it is necessary to create a channel selection table even in the receiving device that receives the area limited broadcast like in the case of receiving the arbitrary one-set broadcast. However, with regard to the area limited broadcast, since the broadcasting area is narrow, even with moving by a distance of about several tens of meters to several kilometers, it becomes difficult to receive the broadcast which has been receivable until that time while it becomes possible to receive new broadcast. Therefore, the channel selection table created before the movement is unlikely to be used after the movement.

Namely, when the broadcast which the user is going to select by operating a so-called channel button is defined as a logical channel, and when the logical channel which was the receivable area limited broadcast before the movement is presented to the user after the movement, based on the channel selection table created before the movement, even if the user performs a channel selection operation of selecting the logical channel, there are cases where the logical channel cannot be received by the receiving terminal which receives the area limited broadcast.

Therefore, in order to present receivable logical channels to the user after the movement, the channel scanning needs to be performed again after the movement.

However, if the channel scanning is performed at the time of each movement, it takes much time to present the receivable logical channels to the user.

Moreover, with regard to the area limited broadcast which is carried out using one segment within a narrow area of several tens of meters to several kilometers, for example, which is set as a broadcasting area, it is anticipated that the broadcast is carried out with many channels.

In this case, presenting many logical channels to the user may hinder the user from discovering a desired logical channel, and may make the user feel troublesomeness.

The present invention is made in view of such a situation, and provides a technology which makes it possible to promptly present receivable one-seg broadcasts to the user so that the user can easily discover a desired broadcast.

### SOLUTIONS TO PROBLEMS

A receiving device or a program according to an aspect of the present invention is a receiving device for one-seg broadcast, including: a station information acquiring unit that acquires station information on a station containing at least broadcasting area information which is information on a broadcasting area capable of receiving a broadcast wave from the station transmitting a broadcast wave of one-seg broadcast through an arbitrary segment; a storage unit that stores the station information; a station selecting unit that selects a station that broadcasts receivable one-seg broadcast, as a channel-selectable station, by using the broadcasting area information; a channel selection control unit that performs channel selection control of selecting the one-seg broadcast of the channel-selectable station; and a registering unit that causes the station information requested to be registered by the user to be stored in the storage unit, or a program which causes a computer to function as the receiving device.

A receiving method according to an aspect of the present invention is a receiving method including the steps of: at a receiving device of one-seg broadcast, acquiring station information on a station containing at least broadcasting area information which is information on a broadcasting area capable of receiving a broadcast wave from the station transmitting the broadcast wave of the one-seg broadcast through an arbitrary segment; storing the station information in a storage unit; selecting a station that broadcasts receivable one-seg broadcast as a channel-selectable station of which channels are selectable, by using the broadcasting area information; and performing channel selection control of selecting the one-seg broadcast of the channel-selectable station, wherein the storage unit stores the station information requested to be registered by the user.

In the above-described aspect, station information is acquired and stored in a storage unit, where the station information is information on a station which transmits a broadcast wave of one-seg broadcast through an arbitrary segment, and the station information includes at least broadcasting area information which is information on a broadcasting area within which the broadcast wave from the station is receivable. The station which broadcasts the receivable one-seg broadcast is selected as a channel-selectable station, based on the broadcasting area information, and a channel of the one-seg broadcast of the channel-selectable station is selected. The station information requested to be registered by the user is stored in the storage unit.

The receiving device may be an independent device and may include internals blocks that constitute one device.

The program can be provided in a manner of being transmitted via a transmission medium or by being recorded in a recording medium.

### EFFECTS OF THE INVENTION

According to one aspect of the present invention, receivable one-seg broadcast can be promptly presented to the user so that the user may easily discover a desired broadcast.

### BRIEF DESCRIPTION OF THE DRAWINGS

Fig. 1 is a flowchart that describes channel selection table creation processing.
Fig. 2 is a diagram that illustrates an example of a channel selection table.
Fig. 3 is a diagram that describes a channel selection operation in a regular one-seg terminal.
Fig. 4 is a diagram that illustrates an example of a configuration of a transmitting/receiving system of an embodiment to which the invention is applied.
Fig. 5 is a diagram that describes assignment of bands of terrestrial digital broadcasting.
Fig. 6 is a diagram that illustrates assignment of segments used for arbitrary one-seg broadcast.
Fig. 7 is a diagram that describes a method of acquiring channel selection information of area limited broadcast.
Fig. 8 is a diagram that describes NIT transmitted through a central segment of a physical channel for area limited broadcast.
Fig. 9 is a diagram that illustrates a configuration of NIT and SDT of a central segment and a non-central segment.
Fig. 10 is a diagram that illustrates a channel scanning operation in each of a receiving terminal 33 and a regular one-seg terminal 100.
Fig. 11 is a diagram that illustrates an example of a channel selection table.
Fig. 12 is a diagram that illustrates broadcasting areas of regular one-seg broadcast, and flow of user traffic which is the trace of movement of the user who carries the regular one-seg terminal 100 which receives only regular one-seg broadcast.
Fig. 13 is a diagram that illustrates broadcasting areas of limited area broadcast, and flow line of user traffic which is the trace of movement of the user who carries the receiving terminal 33 that receives only limited area broadcast.
Fig. 14 is a diagram that illustrates an example of station information.
Fig. 15 is a diagram that illustrates an example of syntax of the station information.
Fig. 16 is a diagram that describes an acquisition method by which a receiving terminal 33 acquires the station information.
Fig. 17 is a diagram that illustrates the data structure of NIT.
Fig. 18 is a diagram that describes a method by which a station 32 transmits station information STi.
Fig. 19 is a block diagram that illustrates a detailed configuration example of a the station 32.
Fig. 20 is a flowchart that describes transmission processing by the station 32.
Fig. 21 is a block diagram that illustrates a detailed configuration example of the receiving terminal 33.
Fig. 22 is a diagram that describes acquisition and usage of the station information by the receiving terminal 33.
Fig. 23 is a block diagram that illustrates a functional configuration of a unit that carries out channel selection control using the station information in a control unit 80.
Fig. 24 is a flowchart that describes processing by which the receiving terminal 33 receives a service by acquiring the station information by scanning channels.
Fig. 25 is a diagram that illustrates a display example of a display unit 76 when the receiving terminal 33 receives a service by acquiring the station information by scanning channels.
Fig. 26 is a flowchart that describes processing by which the receiving terminal 33 receives a service by acquiring the station information by a direct system.
Fig. 27 is a diagram that describes processing by which the receiving terminal 33 receives a service by acquiring the station information the a direct system.
Fig. 28 is a flowchart that describes processing by which the receiving terminal 33 acquires the station information by another system.
Fig. 29 is a flowchart that describes channel selection processing in an individual selection mode.
Fig. 30 is a diagram that illustrates a display example of the display unit 76 when the channel selection processing is performed in the individual selection mode.
Fig. 31 is a flowchart that describes channel selection processing in a sequential selection mode.
Fig. 32 is a diagram that illustrates a display example of the display unit 76 when the channel selection processing is performed in the sequential selection mode.
Fig. 33 is a flowchart that describes channel selection processing in a map display mode.
Fig. 34 is a diagram that illustrates a display example of the display unit 76 when the channel selection processing is performed in the map display mode.
Fig. 35 is a flowchart that describes channel selection processing in a GPS mode.
Fig. 36 is a block diagram that illustrates an example of a hardware configuration of a computer.

### MODE FOR CARRYING OUT THE INVENTION

[Scanning channels by Regular One-seg Terminal]

First, scanning channels by a regular one-seg terminal which is a conventional receiving terminal to receive the regular one-seg broadcast is described.

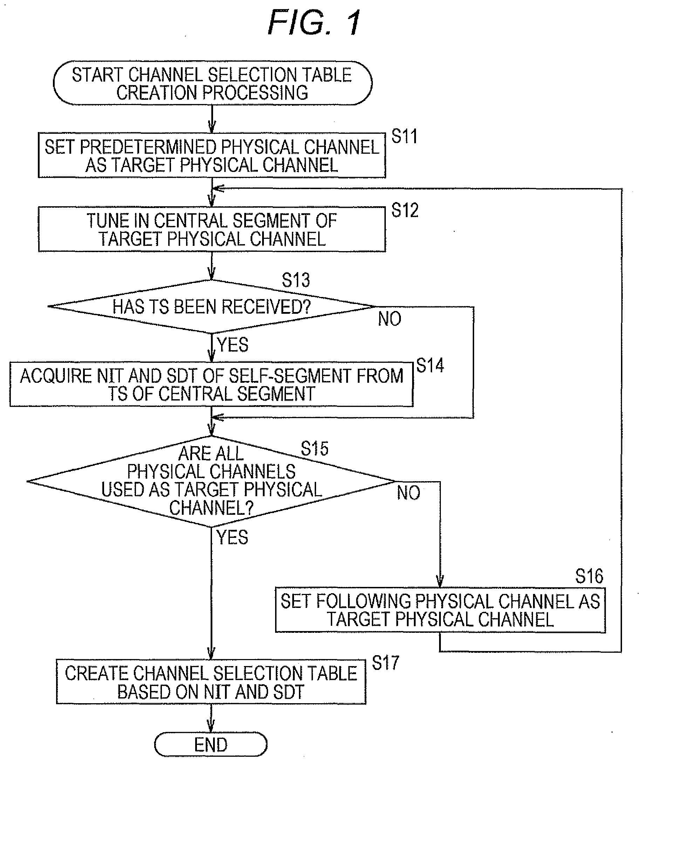

Fig. 1 is a flowchart that describes channel scanning by a regular one-seg terminal.

In Step S11, for example, a one-seg terminal selects one physical channel, for example, a physical channel with the lowest frequency, from among physical channels named channels 13 through 52 of a UHF band, as a target physical channel which is a target of processing, and processing proceeds to Step S12.

In Step S12, the regular one-seg terminal is tuned in the central segment of the target physical channel, and the processing proceeds to Step S13.

In Step S13, the regular one-seg terminal determines whether it is able to receive TS of the central segment of the target physical channel. When it is determined that it is unreceivable, the processing skips Step S14 and proceeds to Step S15.

When it is determined that the TS of the central segment of the target physical channel is receivable in Step S13, the processing proceeds to Step S14 and the regular one-seg terminal acquires (extracts), from the TS received through the central segment, the NIT (Network Information Table) of the self-segment (segment of the received TS) described as NIT actual, and SDT (Service Description Table) of the self-segment described as SDT actual. After that, the processing proceeds to Step S15.

In Step S15, the regular one-seg terminal determines whether all the physical channels of a UHF band, channels 13 through 52, are used as the target physical channel.

When it is determined that there is any remaining physical channel which is not used as the target physical channel in Step S15, the processing proceeds to Step S16 and the regular one-seg terminal selects a physical channel with next lowest frequency higher than that of the present target physical channel as the target physical channel. After that, the processing returns to Step S12.

On the other hand, in Step S15, when it is determined that all the physical channels are used as the target physical channel, the processing proceeds to Step S17 and the regular one-seg terminal creates a channel selection table based on the NIT and the SDT which have been acquired in Step S14. With this, the channel scanning ends.

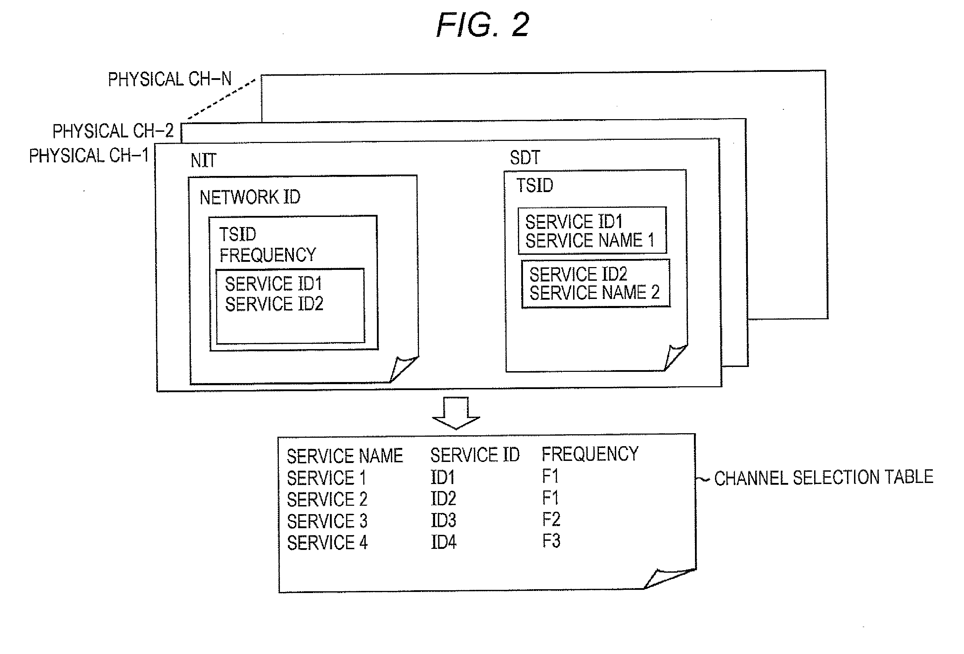

Fig. 2 is a diagram that illustrates the channel selection table created based on the NIT and the SDT.

One described in the NIT include a network ID which is an ID unique to a network and a TSID which is an ID unique to a TS, corresponding to a self-segment; a frequency; and a service ID unique to a service (broadcast). In addition, a TSID corresponding to the self-segment, a service ID, a service name corresponding to the service ID, etc are described in the SDT.

The regular one-seg terminal acquires the frequency for channel selection and the service ID from the NIT of the central segment of each physical channel, acquires the service name corresponding to the NIT from the SDT and associates them, and registers the service ID, the service name, and the frequency into the channel selection table as channel selection information.

Since, in Fig. 2, the central segment of a physical channel CH-1 with a frequency F1 is used for two services whose service IDs are ID1 and ID2, respectively, and the two service IDs ID1 and ID2 are described in the NIT of the central segment of the physical channel CH-1 of the frequency F1.

In the regular one-seg terminal, for example, the service name in the channel selection table is expressed as a name ("OO TV", "xx channel", etc. in a program list) of a logical channel. When the user performs a certain operation of selecting a service (logical channel) corresponding to the service name, the channel of the frequency matched with the service name in the channel selection table will be selected.

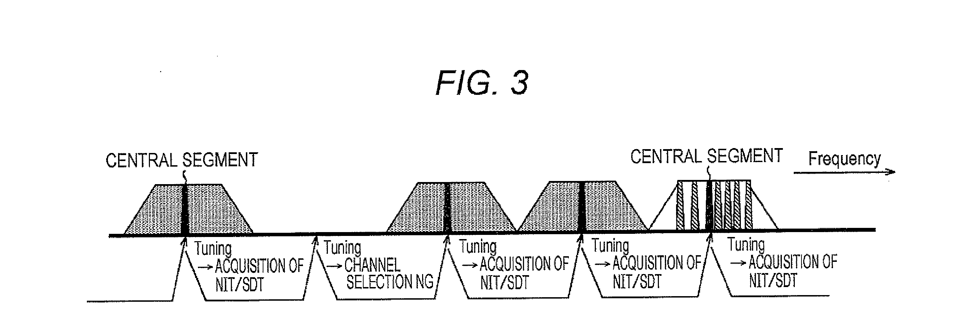

Fig. 3 is a diagram that describes a channel scanning operation of a regular one-seg terminal.

As described in Fig. 1, the regular one-seg terminal is tuned in the central segment of each physical channel of terrestrial digital broadcasting in ascending order of frequency from the lowest frequency, and acquires the NIT and the SDT from the TS when the TS is able to be received through the central segment.

Next, the regular one-seg terminal creates the channel selection table from the NIT and the SDT acquired from the TS in the way described above.

Therefore, when the arbitrary one-seg broadcast is carried out through the central segment, the regular one-seg terminal can acquire the channel selection information of the arbitrary one-seg broadcast. However, the channel selection information of the arbitrary one-seg broadcast carried out through a segment (hatched portion in Fig. 3) other than the central segment cannot be acquired.

[Example of Configuration of Transmitting/Receiving System of One Embodiment to which the Invention is Applied]

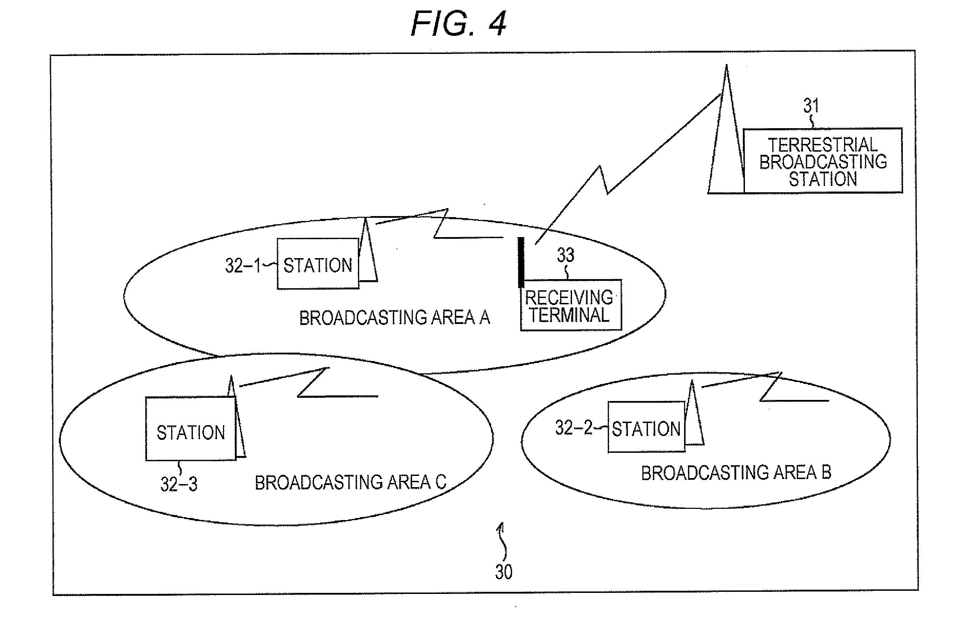

Fig. 4 is a diagram that illustrates an example of a configuration of a transmitting/receiving system of an embodiment to which the invention is applied.

As illustrated in Fig. 4, a transmitting/receiving system 30 includes a terrestrial broadcasting station 31, stations 32-1, 32-2, and 32-3, and a receiving terminal 33.

The terrestrial broadcasting station 31 is a broadcasting station which carries out terrestrial digital broadcasting, broadcasts for fixed terminals with 12 segments, and broadcasts for mobile terminals (carries out regular one-seg broadcast) with one segment.

The stations 32-1 through 32-3 are transmitting devices to transmit a broadcast wave of arbitrary one-seg broadcast, and carries out area limited broadcast which is a sort of the one-seg broadcast using each of one or more arbitrary segments of unassigned channels of terrestrial digital broadcasting.

That is, the station 32-1 carries out the area limited broadcast receivable only in a broadcasting area A.

The station 32-2 carries out the area limited broadcast receivable only in a broadcasting area B, and the station 32-3 carries out the area limited broadcast receivable only in a broadcasting area C.

When the stations 32-1 through 32-3 need not be particularly distinguished, they are collectively called a station (or stations) 32.

Here, examples of the area limited broadcast includes broadcast concerning a theme park that is receivable only within the corresponding theme park, broadcast concerning stores operating in a certain district, a city, etc. which is receivable only within the corresponding district, city, etc.

In the area limited broadcast, stations with the broadcasting areas that do not overlap can broadcast through the same segment.

That is, for example, referring to Fig. 4, since the broadcasting areas A and B do not overlap, the station 32-1 of the broadcasting area A, and the station 32-2 of the broadcasting area B can carry out the area limited broadcast through the same segment.

In addition, referring to Fig. 4, since the broadcasting areas B and C do not overlap, the station 32-2 of the broadcasting area B and the station 32-3 of the broadcasting areas C can carry out the area limited broadcast through the same segment.

However, referring to Fig. 4, since the broadcasting areas A and C partially overlap, the station 32-1 of the broadcasting area A and the station 32-3 of the broadcasting area C cannot use the same segment for carrying out the area limited broadcast (as long as the broadcast is carried out simultaneously).

The receiving terminal 33 is a personal digital assistant which can receive both the regular one-seg broadcast and the area limited broadcast.

For example, as illustrated in Fig. 4, when the user who carries the receiving terminal 33 is in the broadcasting area A, the receiving terminal 33 can receive the regular one-seg broadcast and the area limited broadcast which is broadcast by the station 32-1 having the broadcasting area A.

Since the processing to receive the regular one-seg broadcast in the receiving terminal 33 is the same as in the conventional receiving terminals (regular one-seg terminals) that receive the regular one-seg broadcast, the description thereof is not repeated hereinafter.

[Description about Segment Used for Arbitrary One-seg Broadcast]

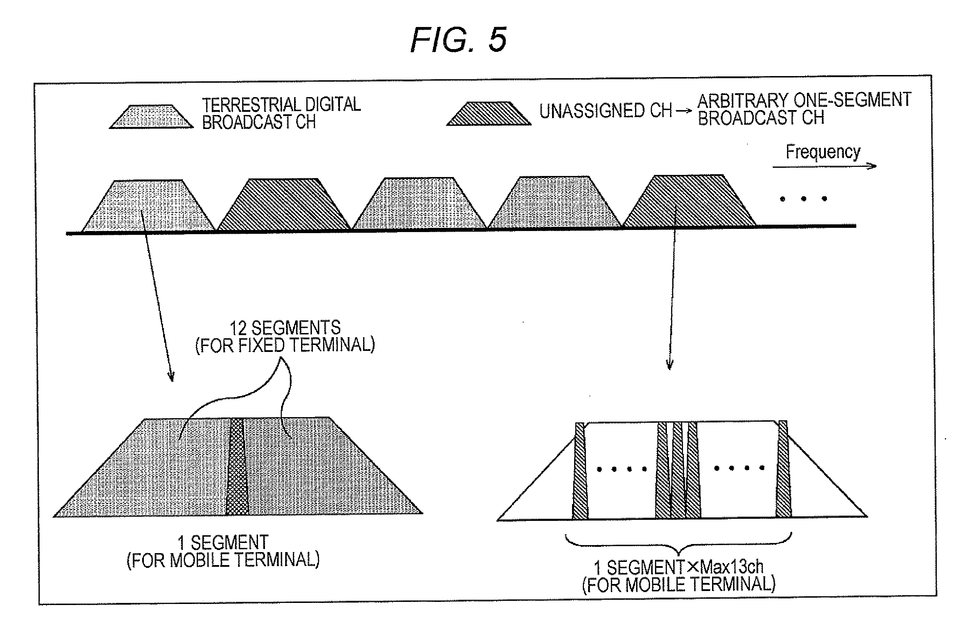

Fig. 5 is a diagram that describes a bandwidth assignment operation for terrestrial digital broadcasting by the transmitting/receiving system 30 of Fig. 4.

As illustrated in Fig. 5, in the transmitting/receiving system 30, the regular one-seg broadcast is carried out using a bandwidth corresponding to one segment at the center of the physical channel used for terrestrial digital broadcasting among all the bandwidths of terrestrial digital broadcasting. The broadcast for fixed terminals is carried out using the bandwidths corresponding to the remaining 12 segments.

Each of one or more segments in the unassigned channel can be used for the area limited broadcast. In one unassigned channel, the maximum number of segments (logical channels) which can be used for the area limited broadcast is 13 channels.

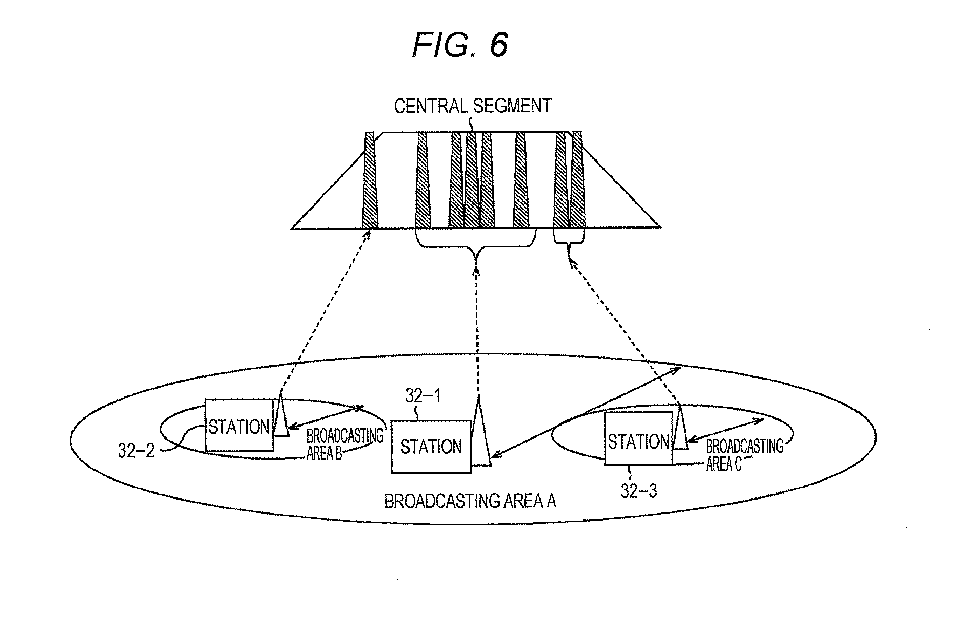

Fig. 6 is a diagram that illustrates an example of segment assignment for the arbitrary one-seg broadcast.

Although the station 32 can assign arbitrary segments of the unassigned channels as the segments for the area limited broadcast which is the arbitrary one-seg broadcast, a central segment may be assigned to a certain station when one or more stations are subsidiary stations of the certain station.

Namely, for example, as illustrated in Fig. 6, the station 32-1 is, so to speak, a central station having a broadcasting area A which covers a predetermined district, the stations 32-2 and 32-3 are, so to speak, local stations having broadcasting areas B and C, respectively, each of which covers a building, an amusement park, or the like in the district, and the broadcasting area A includes the broadcasting areas B and C. In this case, one or more segments including the central segment of a predetermined unassigned channel are assigned to the station 32-1 which is the central station, and the remaining segments other than the segment assigned to the station 32-1 are assigned to the stations 32-2 and 32-3 which are local stations.

[Method of Acquiring Channel Selection Information]

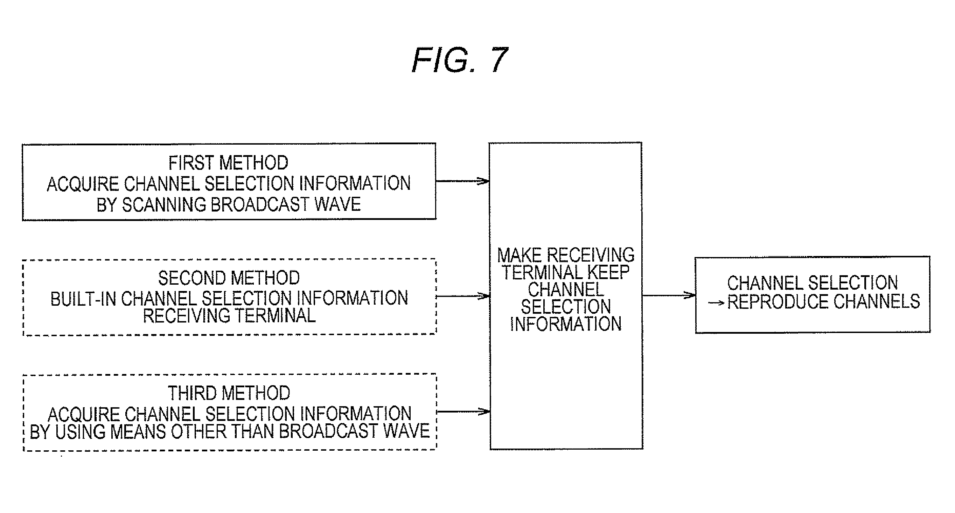

Fig. 7 is a diagram that describes a method of acquiring channel selection information of the area limited broadcast.

As illustrated in Fig. 7, the method of acquiring the channel selection information of the area limited broadcast is mainly classified into three methods: first, second, and third method.

The first method is a method of acquiring the channel selection information by scanning channels which scan the broadcast waves of terrestrial digital broadcasting.

In the first method, the receiving terminal 33 is tuned in each segment of each physical channel of terrestrial digital broadcasting, and acquires the channel selection information of receivable area limited broadcast.

According to the first method, the user who carries the receiving terminal 33 can acquire automatically the channel selection information of the receivable area limited broadcast without having to be aware of whether there is any area limited broadcast receivable in its position.

However, according to the first method, the user has to tune in to each segment of each physical channel of terrestrial digital broadcasting whenever the user moves. Accordingly, it takes time to acquire the channel selection information of the receivable area limited broadcast.

The second method is a method of planting the channel selection information in the receiving terminal 33 (that is, the information is stored beforehand).

The second method does not take much time to acquire channel selection information because the channel selection information is stored in the receiving terminal 33 beforehand.

However, even if the user who carries the receiving terminal 33 carries out an operation of selecting a certain logical channel, out of the channel selection information stored beforehand, the logical channel (area limited broadcast) may be unreceivable outside the broadcasting area of the logical channel.

The third method is a method of acquiring the channel selection information by means other than a broadcast wave, for example, it is a method using communication over the Internet, or communication via a non-contact 1C (Integrated Circuit) card.

According to the third method, as compared with the first method, the channel selection information is promptly acquirable.

However, the third method has a problem in that even if the user who carries the receiving terminal 33 carries out an operation of selecting a certain logical channel, there are cases where the logical channel may be unreceivable like the second method.

As described above, the first method of performing the channel scanning tunes in each segment of each physical channel of terrestrial digital broadcasting, takes time to acquire the channel selection information as compared with the other methods (the second and third methods).

Therefore, a method of more promptly acquiring the channel selection information by the channel scanning in the receiving terminal 33 will be described.

[Description about NIT and SDT Transmitted by Station 32]

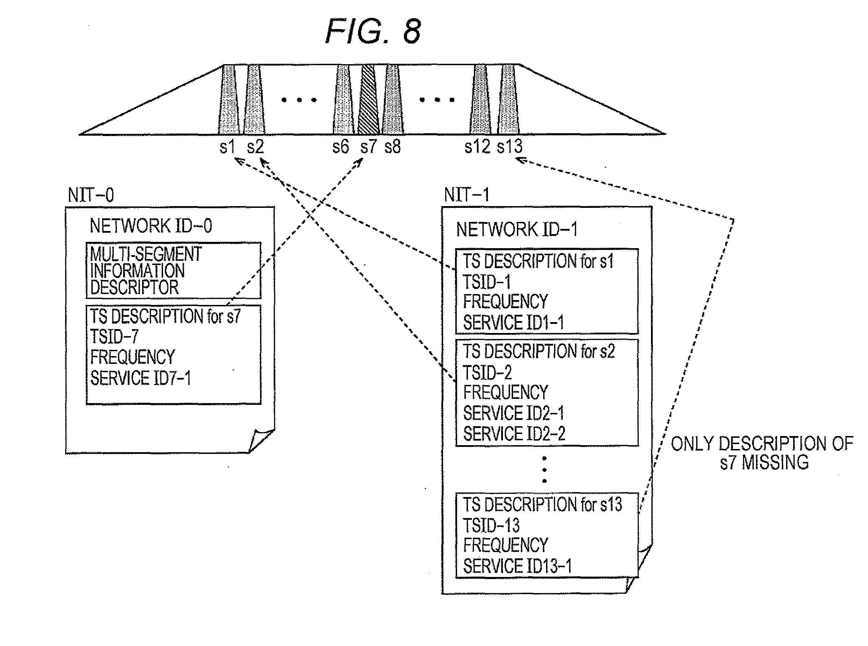

Fig. 8 is a diagram that describes NIT transmitted by the station 32 of Fig. 4.

Now, for example, when area limited broadcast receivable in a certain broadcasting area is carried out through each of 13 segments s1 through s13 which constitute a certain physical channel, the station 32 to which the central segment was assigned transmits NIT-0 and NIT-1 described below through a central segment s7.

NIT-0 includes a network ID, a multi-segment information descriptor, and information (hereinafter, referred to as TS information) on TS of the central segment s7.

A multi-segment information descriptor is a descriptor indicating that arbitrary one-seg broadcast is carried out through a segment of the physical channel containing the central segment s7.

The TS information of the central segment s7 includes a TSID of the TS of the central segment s7, a frequency of the central segment s7, a service ID of the broadcast service of the central segment s7, etc.

The NIT-1 includes a network ID and TS information of segments s1 to s6 and s8 to s13 which are segments other than the central segment s7. The network ID of the NIT-0 differs from the network ID of NIT-1. In the example of Fig. 8, the network ID of the NIT-0 is 0 and the network ID of the NIT-1 is 1.

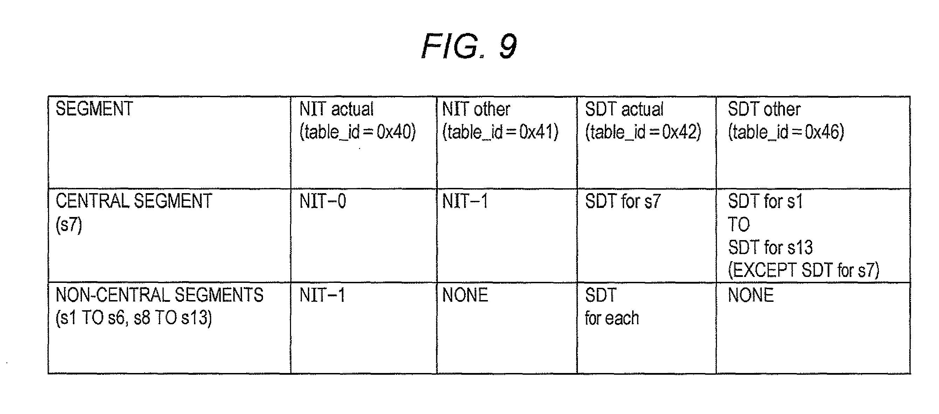

Fig. 9 is a diagram that describes NIT and SDT transmitted through each segment.

In the central segment s7, the NIT-0 is transmitted as NIT actual which describes the NIT of the self-segment, as illustrated in Fig. 9.

In the central segment s7, the NIT-1 is transmitted as NIT other which describes the NIT of the segments (hereinafter, referred to as non-central segments) other than the central segment s7 which is the self-segment of the physical channel to which the central segment s7 belongs.

In addition, at the central segment s7, the SDT of the central segment s7 is transmitted as SDT actual which describes the SDT of the self-segment. In addition, at the central segment s7, SDTs of the non-central segments s1 to s6 and s8 to s13 which describe SDTs of the non-central segments are transmitted as SDT other.

At the non-central segments s1 to s6 and s8 to s13, NIT-1 is transmitted as the NIT actual through each segment, and nothing is transmitted as NIT other. At the non-central segments s1 to s6 and s8 to s13, the SDTs of the self-segments s1 to s6 and s8 to s13 are transmitted as the SDT actual and nothing is transmitted as the SDT, other.

As described above, when the NIT and the SDT are transmitted, the receiving terminal 33 is tuned in the central segment of each physical channel of terrestrial digital broadcasting sequentially in ascending order of frequency, from the lowest frequency.

In addition, when the TS was receivable through the central segment, the receiving terminal 33 acquires the NIT and the SDT of the area limited broadcast, which is broadcast through the central segment, from the SDT actual and the NIT actual of the TS.

The receiving terminal 33 recognizes whether the area limited broadcast, which is the arbitrary one-seg broadcast, is being carried out or whether the regular one-seg broadcast is being carried out, by the presence or absence of the multi-segment information descriptor in the NIT acquired from the NIT actual of the TS of the central segment.

When it is recognized that the area limited broadcast is being carried out, the receiving terminal 33 acquires the SDT and the NIT of the area limited broadcast, which is broadcast through the non-central segments, from the SDT other and NIT other of the TS which was received through the central segment.

The receiving terminal 33 creates a channel selection table including the channel selection information of the area limited broadcast, from the NIT and SDT which were acquired in the way described above.

As described in Figs. 8 and 9, since not only NIT actual and SDT actual but also NIT other and SDT other are arranged in the TS of the central segment, the receiving terminal 33 can acquire the NITs and the SDTs of all the area limited broadcasts of the physical channels which have the central segment, by tuning in only the central segment of each physical channel in order.

Therefore, the receiving terminal 33 can promptly acquire the channel selection information of the area limited broadcast.

The NIT other and the SDT other are not necessarily transmitted through the central segment.

However, when the NIT other and the SDT other are not transmitted through the central segment, the receiving terminal 33 recognizes whether the area limited broadcast is being carried out by the presence or absence of the multi-segment information descriptor in the NIT actual of the central segment. When the area limited broadcast is being carried out, it is necessary to tune in to the non-central segments one by one, and to acquire the NIT actual and the SDT actual of the non-central segments, TS of which was receivable.

Here, information on a network over which the NIT actual is transmitted is included in the NIT actual, and information on a network other than the network over which the NIT other is transmitted is included in the NIT other. In addition, information on a service of the network over which the SDT actual is transmitted is included in the SDT actual, and information on a service of a network other than the network over which the SDT other is transmitted is included in the SDT other.

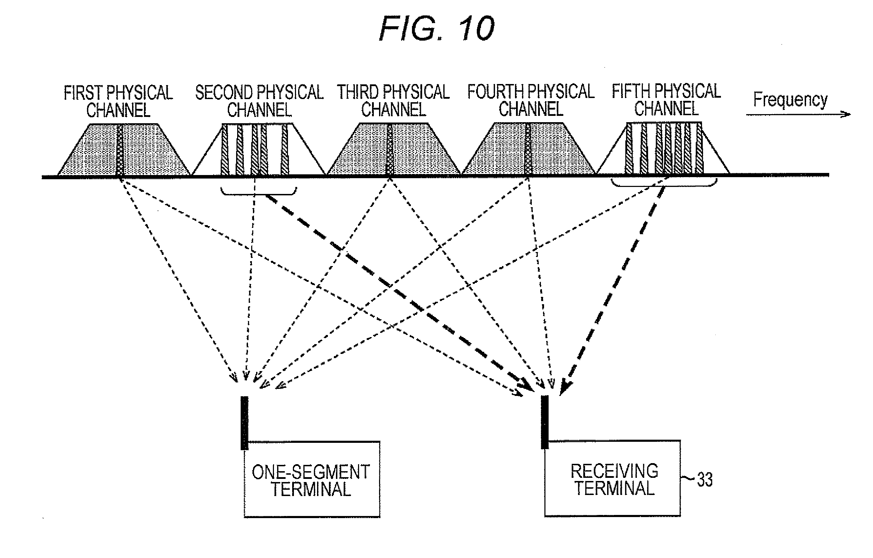

Fig. 10 is a diagram that illustrates a cannel scanning operation by each of the receiving terminal 33 of Fig. 4, and a regular one-seg terminal 100 which is a conventional receiving terminal which receives regular one-seg broadcast.

For example, the receiving terminal 33 and the conventional regular one-seg terminal 100 are tuned in to the central segment of each physical channel sequentially in ascending order of frequency, from the one with the lowest frequency, acquire the channel selection information, and create the channel selection table.

Since the regular one-seg terminal 100 is not configured to receive the area limited broadcast (arbitrary one-seg broadcast), it disregards the multi-segment information descriptor of the NIT actual arranged in the TS of the central segment of the physical channel to which the area limited broadcast is assigned. Therefore, although the regular one-seg terminal 100 is not malfunctioning, it cannot acquire the NIT other and the SDT other.

As a result, in the regular one-seg terminal 100, as illustrated in Fig. 10, the channel selection information is acquired from the NITs and the SDTs of the area limited broadcast and the regular one-seg broadcast of the central segment of each physical channel.

On the other hand, the receiving terminal 33 is configured to receive the area limited broadcast, and recognizes the multi-segment information descriptor of the NIT actual arranged in the TS of the central segment of the physical channel to which the area limited broadcast is assigned, and acquires the NIT other and the SDT other besides the NIT actual and the SDT actual.

As a result, in the receiving terminal 33, the channel selection information is acquirable from the NIT and the SDT of all the one-seg broadcasts assigned to the respective physical channels and the area limited broadcasts.

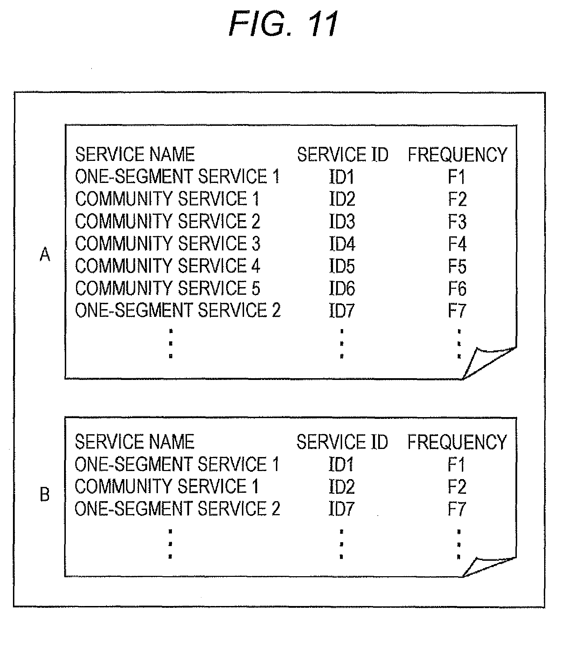

Fig. 11 is a diagram that illustrates an example of the channel selection table created by the receiving terminal 33 in the example of Fig. 10, and the channel selection table created by the regular one-seg terminal.

Fig. 11A illustrates the channel selection table created by the receiving terminal 33.

The service name "one-seg broadcast service 1", the service ID "ID1", and the frequency "F1" of the regular one-seg broadcast assigned to the central segment of a first physical channel of Fig. 10 are first registered into the channel selection table created by the receiving terminal 33.

Next, the service names "community service 1" through "community service 5", the service IDs "ID2" through "ID6" and the frequencies "F2" through "F6" of the area limited broadcasts corresponding to five channels assigned to a second physical channel are registered individually.

And, the service name "one-seg broadcast service 2", the service ID "ID7", and the frequency "F7" of the regular one-seg broadcast assigned to the central segment of a third physical channel are registered.

After that, in a similar manner, the service names, the service IDs, and the frequencies of the regular one-seg broadcast assigned to the central segment of a fourth physical channel and the area limited broadcasts corresponding to seven segments assigned to a fifth physical channel are registered.

Fig. 11B illustrates the channel selection table created by the regular one-seg terminal 100.

In the channel selection table created by the regular one-seg terminal 100, first, the service name "one-seg broadcast service 1", the service ID "ID1", and the frequency "F1" of the regular one-seg broadcast assigned to the central segment of the first physical channel are registered like the channel selection table created by the receiving terminal 33.

Next, the service name "community service 1", the service ID "ID2", and the frequency "F2" of the area limited broadcast assigned to the central segment of the second physical channel are registered.

Next, the service name "one-seg broadcast service 2", the service ID "ID7", and the frequency "F7" of the regular one-seg broadcast assigned to the central segment of the third physical channel are registered like the channel selection table created by the receiving terminal 33.

After that, in a similar manner, the service names, the service IDs, and the frequencies of the regular one-seg broadcast assigned to the central segment of the fourth physical channel and the area limited broadcast assigned to the central segment of the fifth physical channel are registered.

As described above, in the conventional regular one-seg terminal 100, the channel selection information of the area limited broadcasts of the non-central segments cannot be acquired and cannot be registered into the channel selection table, but the channel selection information of the central segment can be acquired and registered into the channel selection table.

Therefore, as described in Figs. 8 and 9, although the NIT and the SDT are transmitted, the reception of the regular one-seg broadcast by the conventional regular one-seg terminal 100 is not hindered.

[Flow of User Traffic and Broadcasting Area]

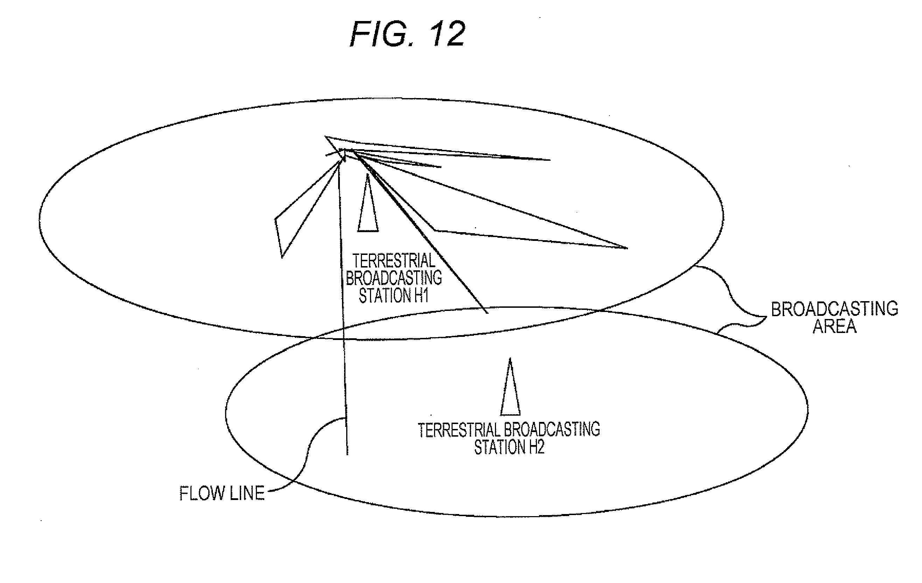

Fig. 12 is a diagram that illustrates broadcasting areas of terrestrial digital broadcasting (regular one-seg broadcast), and flow of user traffic which is the trace of movement of the user who carries a conventional regular one-seg terminal 100 which receives only regular one-seg broadcast.

Since the broadcasting area of the regular one-seg broadcast is broad, in everyday life, the user who carries a conventional regular one-seg terminal 100 moves in a daily life zone which is regularly within the broadcasting area of a specific terrestrial broadcasting station H1 in many cases, and rarely moves over to the broadcasting area of another terrestrial broadcasting station H2 from the own broadcasting area.

Therefore, as illustrated in Fig. 12, in the regular one-seg terminal 100 carried by the user, whose almost all flow lines exist in the broadcasting area of the terrestrial broadcasting station H1 and whose few remaining flow lines exist in the broadcasting area of the terrestrial broadcasting station H2, the channel selection information of the regular one-seg broadcast which is broadcast by the terrestrial broadcasting station H1 is registered into the channel selection table, so that (the service names of) the regular one-seg broadcast, which is broadcast by the terrestrial broadcasting station H1 and which is receivable in almost all cases, are presented to the user as (the services names of) the user-selectable regular one-seg broadcast.

In the regular one-seg terminal 100, besides the channel selection information of the regular one-seg broadcast which is broadcast by the terrestrial broadcasting station H1, the channel selection information of the regular one-seg broadcast which is broadcast by the terrestrial broadcasting station H2 is also registered into the channel selection table. Therefore, the regular one-seg broadcasts which are broadcast by the terrestrial broadcasting stations H1 and H2, respectively can be presented to the user as the user-selectable regular one-seg broadcast.

However, in this case, when the user who carries the regular one-seg terminal 100 is in the broadcasting area of the terrestrial broadcasting station H1, even if the user tunes in to the regular one-seg broadcast of the terrestrial broadcasting station H2, the regular one-seg terminal 100 cannot receive the regular one-seg broadcast of the terrestrial broadcasting station H2.

In a manner similar to the above, when the user who carries the regular one-seg terminal 100 is in the broadcasting area of the terrestrial broadcasting station H2, even if the regular one-seg broadcast of the terrestrial broadcasting station H1 is tuned in, the regular one-seg terminal 100 cannot receive the regular one-seg broadcast of the terrestrial broadcasting station H1.

With the regular one-seg terminal 100, in order to present only the receivable regular one-seg broadcasts to the user, it is necessary to separately register the channel selection information of the regular one-seg broadcast which is broadcast by the terrestrial broadcasting station H1, and the channel selection information of the regular one-seg broadcast which is broadcast by the terrestrial broadcasting state H2 in different channel selection tables, and it is necessary to allow the user to switch (perform an operation) between the channel selection tables so as to select the channel selection table to be used as necessary.

As described above, since the broadcasting area of the regular one-seg broadcast area is broad, there is a rare chance, in everyday life, that the user moves from a certain broadcasting area in which the user's living zone is included to another broadcasting area.

Therefore, events where the channel selection table used for channel selection needs to be switched rarely occur, there are few channel selection tables in which the channel selection information needs to be separately registered, and it is easy to switch between the channel selection tables.

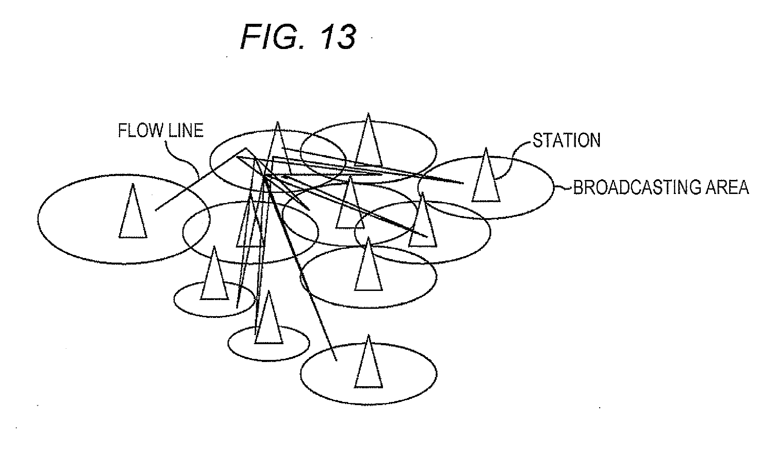

Fig. 13 is a diagram that illustrates broadcasting areas of limited area broadcasts, and the flow of lines which is the trace of movement of the user who carries the receiving terminal 33 that is able to receive the area limited broadcast.

Since the broadcasting areas of the area limited broadcast are narrow, many stations are crowded in a not-so-broad range. As a result, it is expected that the user who carries the receiving terminal 33 frequently moves over between the broadcasting areas of many stations.

Therefore, it is expected that the area limited broadcast (logical channel) which is receivable by the receiving terminal 33 changes frequently while the user is moving within the user's daily life zone.

In the receiving terminal 33, in order to show the user only a limited number of receivable area limited broadcasts like in the regular one-seg terminal 100 described in Fig. 12, when the channel selection information of many area limited broadcasts is separately registered in many different channel selection tables, and when the user is allowed to switch among the channel selection tables to select the channel selection table to be used as necessary, it is necessary to select the channel selection table used for channel selection by switching among many channel selection tables, and it is expected that the frequency of the change is high.

Therefore, in the receiving terminal 33, it is not a practical solution to separately register the channel selection information of many area limited broadcasts into many channel selection tables and get the user to change the channel selection table to be used for channel selection.

For example, in the case of the area limited broadcast which is broadcast in an event site etc., it is expected that a broadcasting time is limited and a broadcasting-hours belt is also limited. Therefore, in the broadcasting areas of any stations, there may be a time zone in which the area limited broadcast is receivable and a time zone in which the area limited broadcast is not receivable.

Therefore, even if the channel selection information of the area limited broadcast is planted beforehand in the receiving terminal 33 as finite information, the channel selection information of the area limited broadcast, the broadcasting period of which has elapsed, becomes useless, and it will be difficult to respond to the area limited broadcast to be started in the future.

On the other hand, even if the receiving terminal 33 carries out the channel scanning which has been described with reference to Fig. 10 and acquires the channel selection information of the receivable area limited broadcast at that time, and after that, when the user has moved, or when time has passed, it cannot be said that the area limited broadcast corresponding to the channel selection information acquired by the past channel scanning can be received.

Therefore, in order to show the user the area limited broadcast which is receivable at that time at the position where the user is present as the user-selectable area limited broadcast, it is necessary to always perform channel scanning (with a short cycle) and to acquire the channel selection information of the receivable area limited broadcast.

However, although the channel scanning described in Fig. 10 is a method of acquiring the channel selection information promptly as compared with the channel scanning which tunes in each segment of each physical channel of the terrestrial digital broadcasting, it still takes a certain amount of time.

Therefore, it is not practical to perform the channel scanning all the time.

Therefore, in order to present the receivable area limited broadcast promptly to the user, information on a station, which contains at least the broadcasting area information which is information on the broadcasting area within which the broadcast wave from a station can be received, is provided to the receiving terminal 33, and the receiving terminal 33 selects the station, which broadcasts the receivable area limited broadcast, as a channel-selectable station, using the station information.

[Description of Station Information]

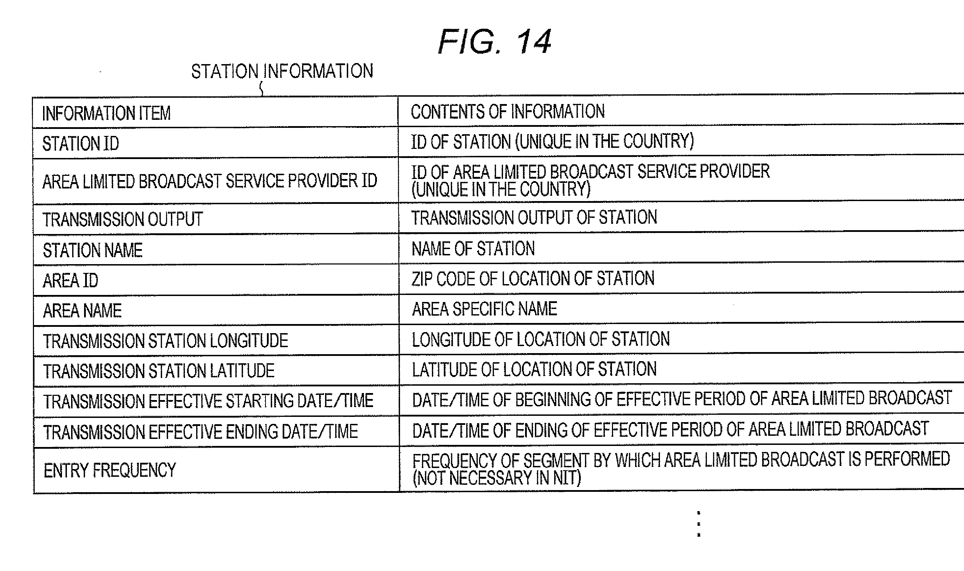

Fig. 14 is a diagram that describes station information.

The station information contains a station ID, an area limited broadcast service provider ID, a transmission output, a station name, a local area ID, a local area name, a transmission station longitude, a transmission station latitude, a transmission effective start date/time, a transmission effective end date/time, an entry frequency, etc.

The station ID is a unique ID to identify a station.

As the ID which is used to identify the station, a method of adopting a network ID is considered.

However, when it is assumed that the network ID is 16 bits and there are many stations which carry out the area limited broadcast, it is anticipated that it becomes difficult to assign 16-bit network IDs uniquely to the stations.

Therefore, in order to identify a station uniquely, the station ID is adopted. It is preferable that the station ID is formed of multiple bits to the extent that many stations can be uniquely discriminated.

The area limited broadcast service provider ID is a unique ID to identify a service provider (area limited broadcast service provider) who broadcasts the area limited broadcast. The area limited broadcast service provider can broadcast the area limited broadcast with one or more stations, and, therefore, even though station IDs in the station information differ, the area limited broadcast service provider IDs may be sometimes the same.

Although not illustrated in Fig. 14, the name of the area limited broadcast service provider identified by the area limited broadcast service provider ID may be included in the station information.

The transmission output is transmission power of the broadcast wave output from the station identified by the station ID.

The station name is the name of the station identified by the station ID.

The local ID is an ID which identifies the location of the station identified by the station ID, for example, a zip code, an area number in a long-distance call number, etc. of the location of the station identified by the station ID.

The area name is the name (area specific name) of the location where the station identified by the station ID exists, or the name of a local area as a broadcasting area.

The transmission station longitude and the transmission station latitude are position information which shows the position (location) of the station identified by the station ID, and are the longitude and latitude of the location of the station identified by the station ID, respectively.

The transmission effective start date/time and the transmission effective end date/time are date/time of the beginning and date/time of ending of an effective term of the area limited broadcast during which the station identified by the station ID broadcasts the area limited broadcast.

Although not illustrated in Fig. 14, in the station identified by the station ID, when a time zone in a day during which the area limited broadcast will be performed is set, the time point of the beginning of the time zone and the time point of the ending of the time zone can be included in the station information.

The entry frequency is the frequency (the frequency of the segment (representative segment) through which the area limited broadcast is broadcast), which is used for channel selection of the area limited broadcast which is broadcast by the station identified by the station ID.

When the station information is transmitted through the segment used for the area limited broadcast so that the area limited broadcast may be provided to the receiving terminal 33, since the entry frequency is contained in the NIT transmitted through the segment, it is not necessarily contained in the station information.

In the station information of Fig. 14, the area name of the station identified by the station ID functions as broadcasting area information.

With use of the station information of Fig. 14, the broadcasting area can be recognized within which the broadcast wave from the station identified by station ID can be received, in which the station can be recognized by using the transmission power, the transmission station longitude, and the transmission station latitude which are position information of the station identified by the station ID. Accordingly, the transmission station longitude, the transmission station latitude, and the transmission power also function as the broadcasting area information.

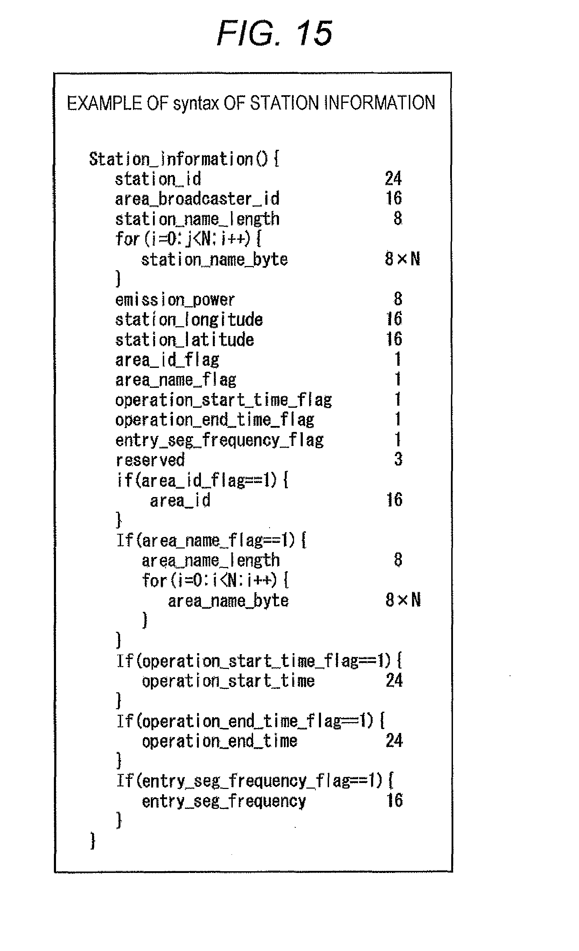

Fig. 15 is a diagram that illustrates an example of syntax (syntax) of the station information.

In the station information Station_information() of Fig. 15, a 24-bit station_id is the station ID and a 16-bit area_broadcaster_id is the area limited broadcast service provider ID.

An 8-bit station_name_length represents the number of characters (number of bytes) of the station name, and a series of N (=station_name_length) of an 8-bit station_name_byte represents the station name.

An 8-bit emission_power is the transmission power. A 16-bit station_longitude and a 16-bit station_latitude are the longitude of the transmission station and the latitude of the transmission station, respectively.

Area_id_flag, area_name_flag, operation_start_time_flag, operation_end_time_flag, and entry_seg_frequency_flag, each being formed of one bit, respectively represent whether the local ID, the area name, the transmission effective start date/time, the transmission effective end date/time, and the entry frequency are included in the station information.

Three bits following the entry_seg_frequency_flag is reserved for the future (reserved).

A 16-bit area_id is the local ID. When the area_id_flag is 1, it is contained in the station information Station_information().

An 8-bit area_name_length represents the number of characters of the area name, and a series of N (=area_name_length) of an 8-bit area_name_byte represents the area name. The area_name_length and the area_name_byte are contained in the station information Station_information() when the area_name__flag is 1.

A 24-bit operation_start_time and an 24-bit operation_end_time represents the transmission effective start date/time and the transmission effective end date/time, respectively. The operation_start_time is contained in the station information Station_information() when the operation_start_time_flag is 1, and the operation_end_time is contained in the station information Station_information() when the operation_end_time_flag is 1.

A 16-bit entry_seg_frequency is the entry frequency. When the entry_seg_frequency_flag is 1, it is contained in the station information Station_information().

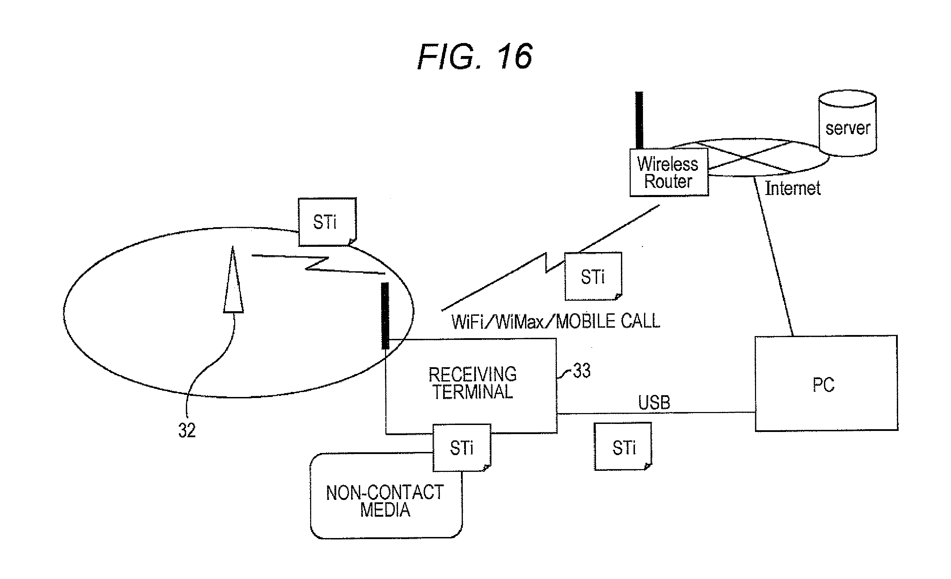

Fig. 16 is a diagram that describes an acquisition method by which the receiving terminal 33 acquires the station information.

The station information STi on one or more (an arbitrary number of) stations is transmitted from the station 32 through a segment and received by the receiving terminal 33. In this way, the receiving terminal 33 can acquire the station information STi.

The station information STi can be stored in a non-contact medium, such as a noncontact IC card (for example, Felica (registered trademark)), and the receiving terminal 33 can acquire it by proximity communication where the station information STi is exchanged between the non-contact medium and the receiving terminal 33.

Alternatively, the station information STi can be stored as a file in a server (server) on the Internet (Internet), and the receiving terminal 33 can acquire it by wireless communication where the station information STi is exchanged between the server and the receiving terminal 33 via wireless LAN or the like.

Further alternatively, the station information STi is downloaded into a PC (Personal Computer) from a server on the Internet, and the receiving terminal 33 can acquire the station information STi in a manner that the PC and the receiving terminal 33 exchanges the station information STi by communication using a USB (Universal Serial Bus), etc.

When the station information is transmitted through a segment from the station 32, the station information can be included in the NIT.

The station 32 enables the station information on the station 32 to be included in the NIT actual as a descriptor, and can transmit it through the representative segment which is one segment among one or more segments used for the area limited broadcast which is broadcast by the station 32.

Here, an arbitrary segment out of one or more segments used for the area limited broadcast which is broadcast by the station 32 is adopted as the representative segment of the station 32. However, when one or more segments used for the area limited broadcast which is broadcast by the station 32 include the central segment, for example, the central segment can be used as the representative segment.

The station 32 enables the station information on stations other than the station 32 to be included in the NIT other as a descriptor, and can transmit it through the representative segment of the station 32.

As other stations, the station information of which is included in the NIT other transmitted by the station 32, arbitrary stations such as a station which broadcasts the area limited broadcast using the other segments of a physical channel having the segment which is used for the area limited broadcast by the station 32 can be adopted..

In addition, the transmission of the NIT other including the station information on the other stations can be performed only by the station which uses the central segment as the representative segment.

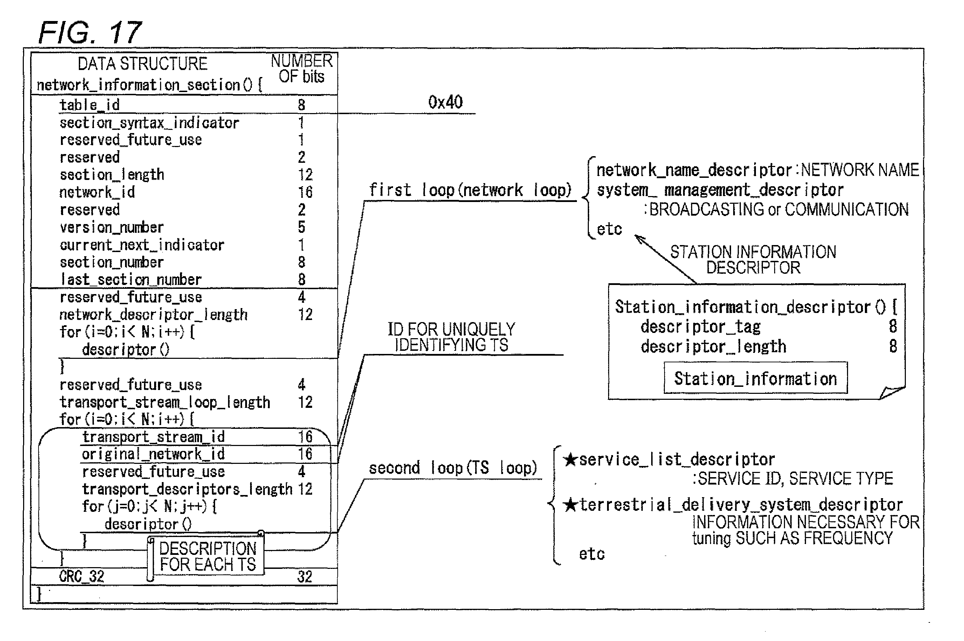

Fig. 17 is a diagram that illustrates an example of the syntax (data structure) of the NIT that includes the station information.

In the NIT, an 8-bit table ID (table_id), a 1-bit section syntax indicator (section_syntax_indicator), and a 1-bit future usage region (reserved_future_use) are arranged sequentially in this order from the head of the NIT.

When the NIT is NIT as the NIT actual, the table ID is set to 0x40. When the NIT is NIT as the NIT other, the table ID is set to 0x41.

Behind the future usage region, a 2-bit free space (reserved), a 12-bit section leader (section_length), a 16-bit network ID (network_ID), a 2-bit free space (reserved), and a 5-bit version number (version_number) are arranged in order.

Behind that, a 1-bit current next indicator (current_next_indicator), an 8-bit section number (section_number), an 8-bit last section number (last_section_number), and a 4-bit future usage region are arranged in order.

Next, a 12-bit network descriptor length (network_descriptor_length), and a network loop (network loop) which is a first loop (first loop) are arranged in order.

In the network loop, one or more descriptors (descriptor ()) corresponding to the length of the network descriptor can be arranged.

As the descriptor of the network loop, a network name descriptor (network_name_descriptor), a system management descriptor (system_management_descriptor), etc. are arranged for every network ID described in the preceding paragraph.

A network name is described in a network name descriptor and information indicating whether the network is a broadcast network or a communication network is included in a system management descriptor.

Here, when the station information Station_information() is included in the NIT, the station information descriptor Station_information_descriptor() is included in the descriptor of a network loop.

An 8-bit descriptor_tag indicating that the station information is included in the station information descriptor Station_information_descriptor(), and an 8-bit descriptor_length indicating the size of the station information descriptor Station_information_descriptor() are sequentially arranged in the station information descriptor Station_information_descriptor ().

Next, the station information Station_information() (see Fig. 15) is arranged continuously after that.

When a multi-segment information descriptor is described in the NIT, a multi-segment information descriptor is also described as a descriptor of the network loop of the NIT which is the NIT actual.

Behind the network loop, a 4-bit future usage region, a 12-bit TS loop length (transport_stream_loop_length), a TS loop which is a second loop, and a 32-bit CRC (Cyclic Redundancy Check) 32-value (CRC_32) are arranged in order.

One or more descriptors (descriptor()) corresponding to the length of a TS loop can be arranged in the TS loop.

As a descriptor of the TS loop, a service list descriptor (service_list_descriptor), and a terrestrial system scripter (terrestrial_delivery_system_descriptor), etc. are described for every TS. A service type which indicates a type of a broadcasting service (television broadcasting, radio broadcasting, etc.), and a service ID are described in a service list descriptor, and information necessary for the channel selection, such as the frequency (entry frequency) is described in a terrestrial system descriptor.

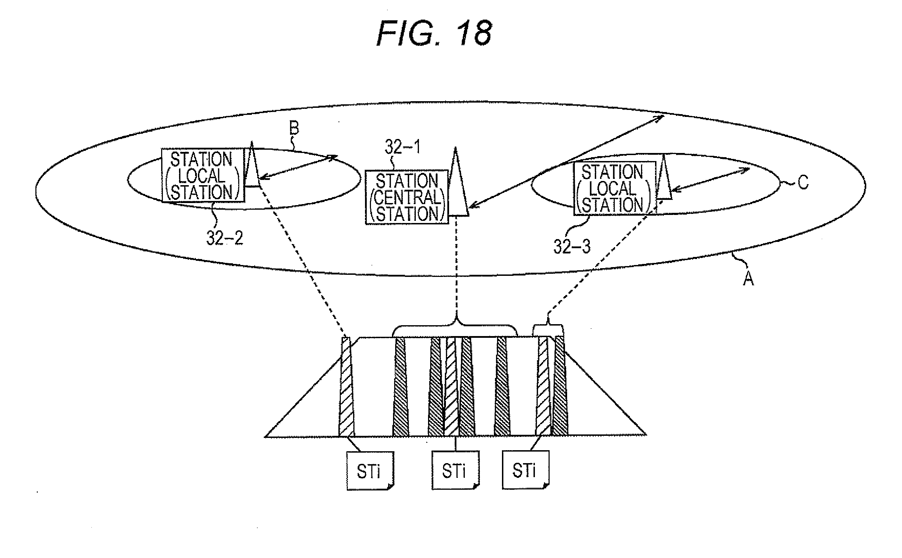

Fig. 18 is a diagram that describes a method by which the station 32 transmits the station information STi.

In Fig. 18, the station 32-1 is a central station, and the stations 32-2 and 32-3 are local stations which are subsidiary to the station 32-1.

A broadcasting area A of the station 32-1 which is a central station includes a broadcasting area B of the station 32-2 which is a local station, and a broadcasting area C of the station 32-3 which is a local station like the station 32-2.

Five or more segments including the central segment of a predetermined physical channel are assigned to the station 32-1 which is a central station.

One non-central segment of the predetermined physical channel (a non-central segment which is not assigned to the station 32-1) is assigned to the station 32-2 which is a local station, and two non-central segments of the predetermined physical channel (non-central segments which are assigned to neither the station 32-1 nor the station 32-2) are assigned to the station 32-3 which is a local station.

The station 32-1 uses, as a representative segment, the central segment among the five segments currently assigned to the station 32-1, and transmits the NIT which includes at least the station information STi on the self-station, the station 32-1, through the central segment which is the representative segment.

The station 32-2 uses, as a representative segment, the one segment currently assigned to the station 32-2, and transmits the NIT which includes at least the station information STi on the self-station, the station 32-2, through the representative segment.

The station 32-3 uses, as a representative segment, an arbitrary one segment of the two segments currently assigned to the station 32-3, and transmits the NIT which includes at least the station information STi on the self-station, the station 32-3, through the representative segment like the station 32-3.

As described above, the station 32 can transmit the station information on other stations.

[Example of Configuration of Station 32]

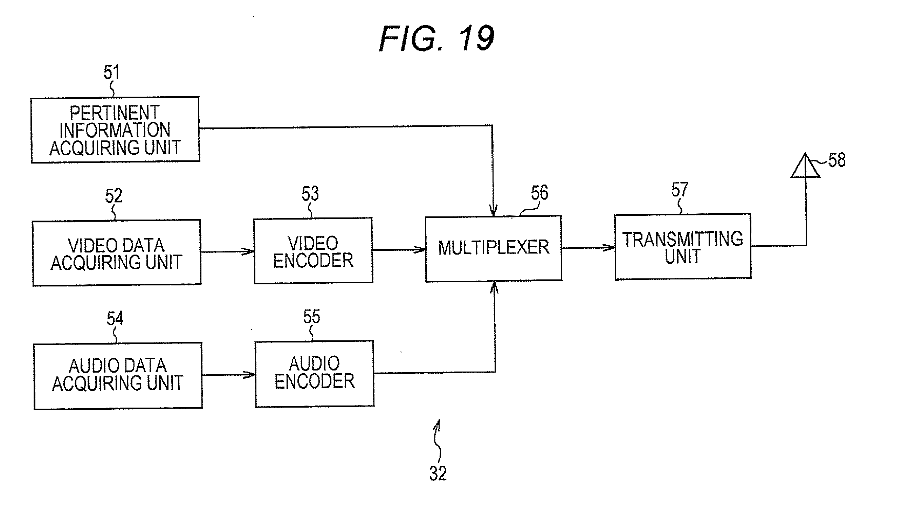

Fig. 19 is a block diagram that illustrates a detailed configuration example of the station 32 of Fig. 4.

In Fig. 19, the station 32 includes a pertinent information acquiring unit 51, a video data acquiring unit 52, a video encoder 53, an audio data acquiring unit 54, an audio encoder 55, a multiplexer 56, a transmitting unit 57, and an antenna 58.

The pertinent information acquiring unit 51 generates and acquires pertinent information such as: information, which is used to receive a service and includes PMT and PAT, NIT of the area limited broadcast, SDT, etc.; frequency information; PSI (Program Specific Information) which is control information such as information for specifying a packet corresponding to a service; and information (hereinafter, referred to as display control information) for performing display using a browser in the area limited broadcast. Then, the pertinent information acquiring unit 51 supplies the acquired information to the multiplexer 56.

The pertinent information acquiring unit 51 acquires the station information included in the NIT when the NIT is generated.

That is, for example, when the station information on the station 32 is stored in a memory (not illustrated), the pertinent information acquiring unit 51 acquires the station information on the station 32 by reading the station information from the memory.

In addition, when the station information on other stations is included in the NIT, the pertinent information acquiring unit 51 acquires the station information on other stations by downloading it from the other stations via a network, for example.

The video data acquiring unit 52 acquires video data of the area limited broadcast, from a built-in HDD (Hard Disk Drive) (not illustrated), an external server, a camera, etc., and supplies it to the video encoder 53.

The video encoder 53 encodes the video data supplied from the video data acquiring unit 52, based on an encoding scheme such as MPEG (Moving Picture Experts Group), and supplies the resultant data to the multiplexer 56.

The audio data acquiring unit 54 acquires audio data of the area limited broadcast from a built-in HDD (not illustrated), an external server, a microphone (microphone), etc., and supplies it to the audio encoder 55.

The audio encoder 55 encodes the audio data supplied from the audio data acquiring unit 54, based on an encoding scheme, such as MPEG, and supplies the resultant data to the multiplexer 56.

The multiplexer 56 multiplexes the pertinent information supplied from the pertinent information acquiring unit 51, the video data supplied from the video encoder 53, and the audio data supplied from the audio encoder 55, generating the TS, and supplies it to the transmitting unit 57.

The transmitting unit 57 transmits the TS supplied from the multiplexer 56 using a predetermined segment via the antenna 58.

In the transmitting unit 57, the TS obtained by multiplexing the NIT including the station information on the station 32 and serving as the pertinent information, among the TSs supplied from the multiplexer 56, is transmitted through the representative segment of the station 32.

[Description of Processing of Station 32]

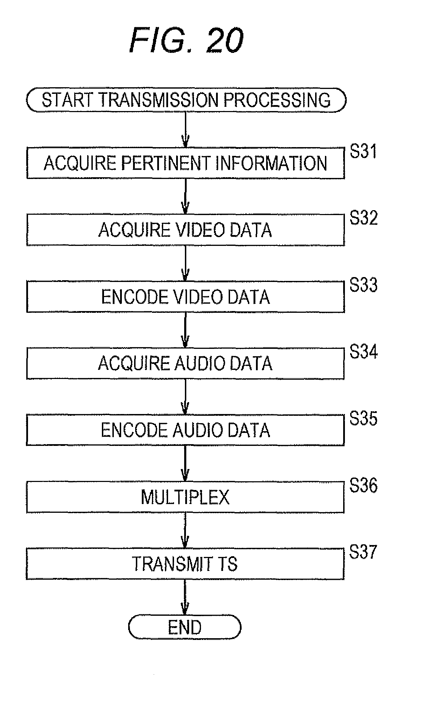

Fig. 20 is a flowchart that describes processing (transmission processing) of the station 32 of Fig. 19.

In Step S31, the pertinent information acquiring unit 51 acquires the station information on the station 32, that is, the station information which needs to be transmitted by the station 32, and the station information on other stations. The pertinent information acquiring unit 51 generates the PSI of the area limited broadcast such as the NIT including the station information, and pertinent information such as display control information to acquire them, and supplies them to the multiplexer 56.

In Step S32, the video data acquiring unit 52 acquires the video data of the area limited broadcast, and supplies it to the video encoder 53.

In Step S33, the video encoder 53 encodes the video data supplied from the video data acquiring unit 52, and supplies the resultant data to the multiplexer 56. In Step S34, the audio data acquiring unit 54 acquires the audio data of the area limited broadcast, and supplies it to the audio encoder 55.

In Step S34, the audio data acquiring unit 54 acquires the audio data of the area limited broadcast, and supplies it to the audio encoder 55.

In Step S35, the audio encoder 55 encodes the audio data supplied from the audio data acquiring unit 54, and supplies the resultant data to the multiplexer 56.

In Step S36, the multiplexer 56 multiplexes the pertinent information supplied from the pertinent information acquiring unit 51, the video data supplied from the video encoder 53, and the audio data supplied from the audio encoder 55, thereby to generate TS.

Herein, when the transmitting unit 57 transmits the TS using a central segment, the multiplexer 56 generates, as the TS of the central segment, the TS including NIT-0 (see Fig. 8) as NIT actual, NIT-1 as NIT other, SDT of a self-segment as SDT actual, and SDT of a non-central segment as SDT other.

When the transmitting unit 57 transmits the TS using a non-central segment, the multiplexer 56 generates, as the TS of the non-central segment, the TS including NIT-1 as NIT actual and SDT of a self-segment as SDT actual.

Herein, since the central segment is the representative segment, the NIT actual (NIT-0) in which the station information on the station 32 is described is included in the TS of the central segment.

In addition, the TS of the central segment may further include the NIT other (NIT-1) in which the station information on stations other than the station 32 is described.

When the non-central segment is the representative segment, the NIT actual (NIT-1) in which the station information on the station 32 is described is included in the TS of the non-central segment which is the representative segment.

In Step S37, the transmitting unit 57 transmits the TS supplied from the multiplexer 56 via the antenna 58, using a predetermined segment through which the TS should be transmitted, and the processing ends.

As described above, the station 32 acquires the station information on the station 32 and the station information on the other stations, and transmits it through the representative segment which is one segment out of one or more segments used for the arbitrary one-seg broadcast (the area limited broadcast) which is broadcast by the station 32. In this way, the receiving device 33 which has acquired the station information can quickly present the receivable area limited broadcast by using the station information.

[Example of Detailed Configuration of Receiving Terminal 33]

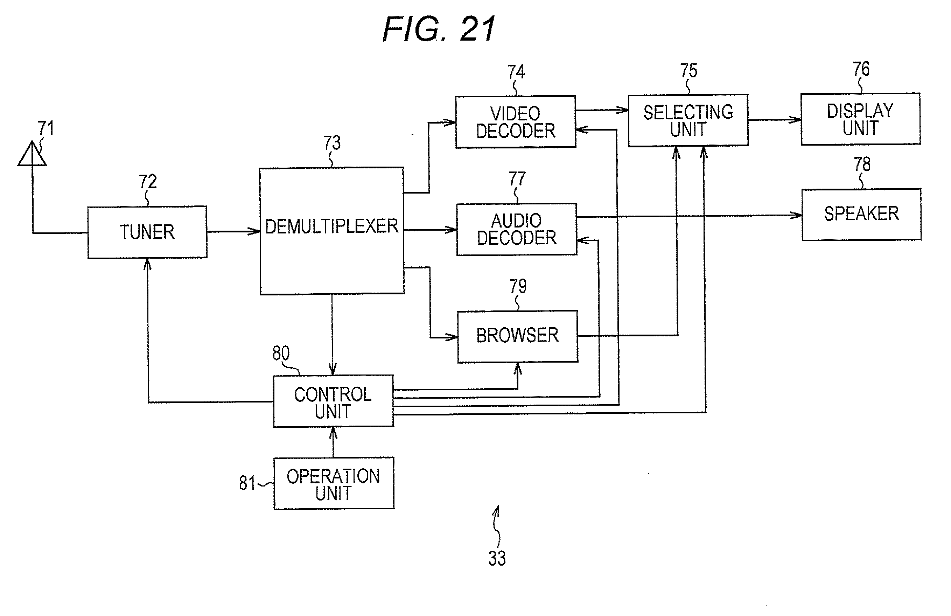

Fig. 21 is a block diagram that illustrates a detailed configuration example of the receiving terminal 33 of Fig. 4.

In Fig. 21, the receiving terminal 33 includes an antenna 71, a tuner 72, a demultiplexer 73, a video decoder 74, a selecting unit 75, a display unit 76, an audio decoder 77, a speaker 78, a browser 79, a control unit 80, and an operation unit 81.

The antenna 71 receives the broadcast wave of the UHF band from the terrestrial broadcasting station 31 or the station 32, and supplies an IF (Intermediate Frequency) signal acquired by receiving the broadcast wave, to the tuner 72.

According to the control of the control unit 80, the tuner 72 tunes in (for example, recovers) (a signal of) the area limited broadcast or the regular one-seg broadcast of a predetermined logical channel (segment), from the IF signal supplied via the antenna 71, and supplies the TS obtained as a result, to the demultiplexer 73.

The demultiplexer 73 divides the TS supplied from the tuner 72 into video data, audio data, display control information, each information on the PSI, etc. The demultiplexer 73 supplies the video data to the video decoder 74, and supplies the audio data to the audio decoder 77. The demultiplexer 73 supplies the display control information to the browser 79, and supplies each information on the PSI to the control unit 80.

According to the control of the control unit 80, the video decoder 74 decodes the video data supplied from the demultiplexer 73 by a method corresponding to the video encoder 53 (see Fig. 19), and supplies the resultant data to the selecting unit 75.

The selecting unit 75 selects the video data supplied from the video decoder 74, or the video data supplied from the browser 79 according to the control of the control unit 80, and supplies the selected data to the display unit 76.

The selecting unit 75 supplies the video data of an image, such as OSD (On Screen Display), to the display unit 76 according to the control of the control unit 80.

The display unit 76 displays an image or the like of the regular one-seg broadcast or the area limited broadcast, based on the video data supplied from the selecting unit 75.

According to the control of the control unit 80, the audio decoder 77 decodes the audio data supplied from the demultiplexer 73 by a method corresponding to the audio encoder 55 (see Fig. 19), and supplies the resultant data to the speaker 78.

The speaker 78 outputs the sound corresponding to the audio data supplied from the audio decoder 77, i.e., the sound of the regular one-seg broadcast or the area limited broadcast.

In addition to this, the speaker 78 can output predetermined sound (for example, beep sound, etc.) according to the control of the control unit 80.

The browser 79 interprets the display control information supplied from the demultiplexer 73 to generate the video data, and supplies it to the selecting unit 75.

The control unit 80 controls each block which constitutes the receiving terminal 33 as well as carries out various kinds of processing in response to an operation signal supplied from the operation unit 81.

Namely, the control unit 80 stores the frequency of the central segment of each physical channel of the terrestrial digital broadcasting as preset frequencies for channel scanning, and, at the time of scanning channels, carries out channel selection control of controlling the tuner 72 such that the preset frequencies (segments) may be sequentially tuned in.

The control unit 80 generates a channel selection table, based on the NIT actual and the SDT actual of each segment of each physical channel which are included in the PSI supplied from the demultiplexer 73, and/or the NIT actual, the NIT other, the SDT actual, and the SDT other, and stores it in a built-in memory (not illustrated).

In addition, the control unit 80 supplies the service name registered in the channel selection table to the display unit 76 via the selecting unit 75 in response to the operation signal supplied from the operation unit 81 so that the channel selection table may be displayed on the display unit 76.

Herein, the user is able to see the service name displayed on the display unit 76 and can operate the operation unit 81 so that the service name of the service (logical channel) which is a watching target may be chosen.

The control unit 80 recognizes the frequency serving as the channel selection information of the service of the service name of the watching target from the channel selection table according to operation of this operation unit 81, and carries out the channel selection control of controlling the tuner 72 so that the frequency (of the segment) may be tuned in.

The control unit 80 controls the video decoder 74, the selecting unit 75, the audio decoder 77, and the browser 79, based on each information on the PSI supplied from the demultiplexer 73. Specifically, the control unit 80 controls the video decoder 74 and the audio decoder 77 so that the video data output from the video decoder 74 and the audio data output from the audio decoder 77 may be synchronized, for example.

When the station information is included in the NIT of the PSI, the control unit 80 acquires the station information and stores it as necessary.

Next, the control unit 80 carries out the channel selection control using the station information.

Namely, the control unit 80 selects the station of the area limited broadcast which is currently receivable, as a channel-selectable station, the channels of which are selectable, by using the station information, and displays, on the display unit 76, the station name (see Fig. 14) of the channel-selectable station, and/or the service name of the service of the area limited broadcast which is broadcast by the channel-selectable station via the selecting unit 75.

In addition, the control unit 80 recognizes the frequency of (the service of) the area limited broadcast of the channel-selectable station from the station information or the channel selection table, and carries out the channel selection control of controlling the tuner 72 so that the frequency may be tuned in.

The operation unit 81 is operated by the user and supplies the operation signal corresponding to the operation to the control unit 80. Moreover, the operation unit 81 includes buttons displayed on the display unit 76 as GUI (Graphics User Interface) besides physical buttons, etc.

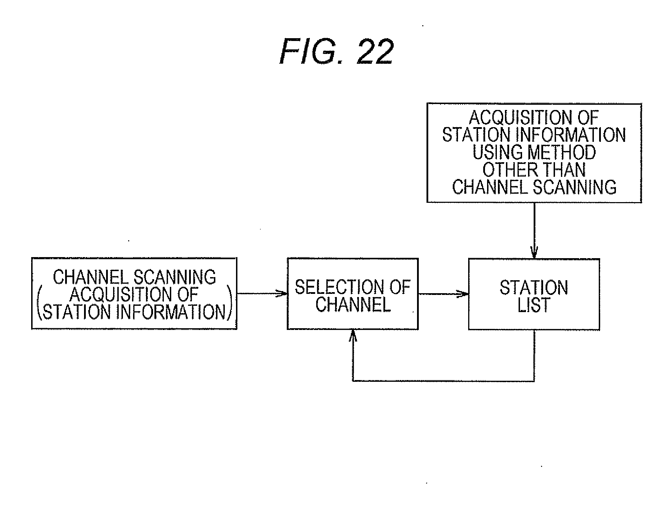

Fig. 22 is a diagram that describes acquisition and usage of the station information in the receiving terminal 33 of Fig. 21.

As described above, when the station 32 transmits the station information in the form of information included in the NIT, the receiving terminal 33 can acquire the station information from the NIT received at the time of scanning channels, etc., for example.

As described in Fig. 16, the receiving terminal 33 may acquire the station information by a method other than the channel scanning.

In the receiving terminal 33, the control unit 80 acquires the station information and registers the station information into the station list which is a list into which the station information is recorded (stored) as necessary.

Next, the control unit 80 carries out the channel selection control using the station information.

[Example of Configuration of Control Unit 80]

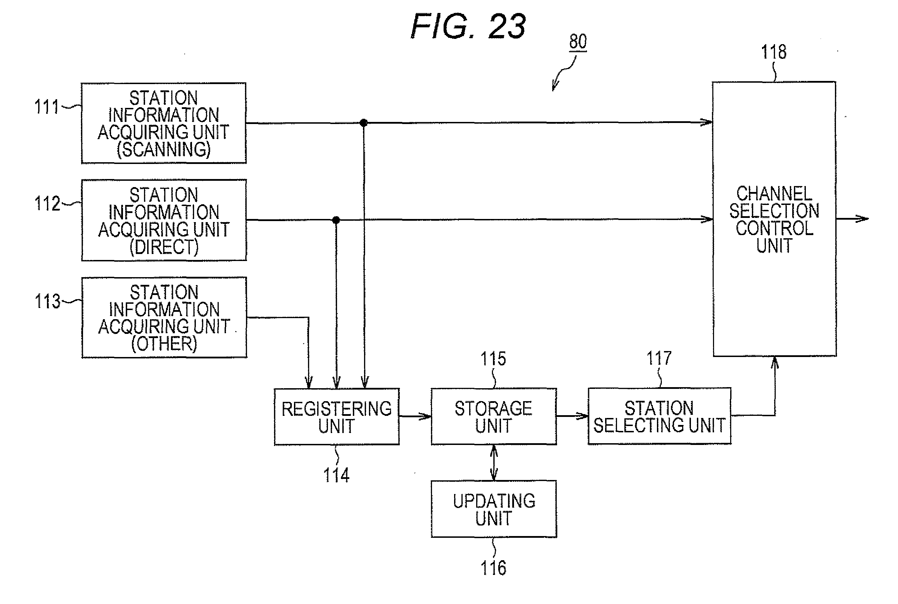

Fig. 23 is a block diagram that illustrates an example of a functional configuration of a portion that carries out the channel selection control using the station information in the control unit 80 of Fig. 21.

In Fig. 23, the control unit 80 includes station information acquiring units 111, 112, and 113, a registering unit 114, a storage unit 115, an updating unit 116, a station selecting unit 117, and a channel selection control unit 118.

The station information acquiring units 111 through 113 acquire the station information.

That is, the station information acquiring unit 111 acquires the station information from the NIT obtained in a manner that the tuner 72 carries out the channel scanning, and supplies it to the registering unit 114 and the channel selection control unit 118.

When the operation unit 81 is operated to perform the channel scanning, for example, the channel selection control unit 118 described below carries out the channel selection control of controlling the tuner 72 so that the frequency of the central segment of each physical channel of the terrestrial digital broadcast, that is, the frequencies stored as the preset frequencies, may be tuned in sequentially.

The tuner 72 tunes in the preset frequencies according to the channel selection control of the channel selection control unit 118. When the area limited broadcast at the tuned-in preset frequencies is receivable, that is, when the TS of the area limited broadcast was able to be obtained as a result of the channel selection, the tuner 72 supplies the TS to the demultiplexer 73.

The demultiplexer 73 separates the PSI from the TS supplied from the tuner 72, and supplies it to the control unit 80.

As described above, at the time of scanning channels, the control unit 80 creates the channel selection table in which the channel selection information of the services (area limited broadcasts) which are receivable at this time are registered as necessary, from the NIT and the SDT which are included in the PSI supplied from the demultiplexer 73.

In the control unit 80, the station information acquiring unit 111 acquires the station information from the NIT obtained at the time of scanning channels.

The station information acquiring unit 112 acquires the station information by a direct system, and supplies it to the registering unit 114 and the channel selection control unit 118.

Herein, for example, when the area limited broadcast, which is broadcast by the station 32, is a broadcast concerning events currently occurring in the broadcasting area of the station 32, a poster in which the station information on the station 32 is printed in the form of a barcode or the like, and/or a poster in which a wireless tag with the station information stored therein is attached may be posted in the broadcasting area of the station 32.

In this case, the station information acquiring unit 112 includes a built-in reader which reads the barcode, or a built-in reader/writer which performs proximity communication (non-contact communication) with the wireless tag therein, and thus acquires the station information on the station 32 from the barcode or the wireless tag of the poster when the receiving terminal 33 is brought into close contact with the poster for the purpose of acquiring the station information on the station 32.

As described above, in the broadcasting area of a specific station 32, a method of acquiring the station information which can acquire only the station information on the station 32 is a direct system.

The station information acquiring unit 113 acquires the station information by a method (other method) which is neither the channel scanning nor the direct system, and supplies it to the registering unit 114.

Namely, when the tuner 72 receives the arbitrary one-seg broadcast or the regular one-seg broadcast (that is, when TS of the arbitrary one-seg broadcast or the regular one-seg broadcast is obtained), and when the station information on each of one or more stations is included in the NIT of the TS of the arbitrary one-seg broadcast or the regular one-seg broadcast, the station information acquiring unit 113 can acquire the corresponding station information.

For example, when the receiving terminal 33 has a function of a web browser, and when a web server on the Internet provides the station information on each of one or more stations, the station information acquiring unit 113 can acquire the station information by accessing the web server.

When the receiving terminal 33 is connected, for example, to a PC which has downloaded the station information from the server which provides the station information on each of one or more stations, the station information acquiring unit 113 can acquire the station information from the PC.

In addition, for example, when there is a printed matter (for example, a poster, a catalog, a magazine, etc.) in which the station information on each of one or more stations is printed in the form of a barcode or there is a printed matter provided with a wireless tag in which the station information on each of one or more stations is stored, and when the user brings the receiving terminal 33 into close contact with the printed matter, the station information acquiring unit 113 can acquire the station information from the barcode or the wireless tag of the printed matter.

The registering unit 114 supplies the station information supplied from the station information acquiring units 111 through 113 to the storage unit 115 so that the station information may be stored as necessary (it is registered into the station list in the storage unit 115).

That is, the registering unit 114 allows only the station information requested by the user to be registered among the station information supplied from the station information acquiring units 111 through 113, to be stored in the storage unit 115.

Herein, for example, there may be a case where the user who has watched the area limited broadcast received by the tuner 72 does not want to watch the area limited broadcast any more, after the channel selection control unit 118 performs the channel selection control, for example, using the station information supplied from the station information acquiring unit 111.

In this case, the station information on the station which is carrying out the area limited broadcast at this time is unnecessary.

In addition, when the station information on a large number of stations which includes unnecessary station information is stored in the storage unit 115, many stations (station names) will be displayed on a station list screen described below, and, as a result, it is difficult for the user to select a desired station.

Therefore, the registering unit 114 enables the station information to be stored in the storage unit 115 when the operation unit 81 (see Fig. 21) is operated (hereinafter, referred to as a bookmark operation) according to the user's demand.

In this way, it is possible to prevent user's selection of a desired station from becoming complicated due to the display of many stations on the station list screen, that is, it is possible to present the stations to the user such that the user can easily discover the user's desired broadcast.

The storage unit 115 stores the station information supplied from the registering unit 114. That is, the storage unit 115 stores the station list in which the station information is registered, and registers the station information supplied from the registering unit 114 into the station list.

The updating unit 116 updates the station information stored in the storage unit 115.

That is, as illustrated in Fig. 14, the station information includes the transmission effective start date/time and transmission effective end date/time, which are respectively date/time at the beginning and date/time at the ending of the effective term of the area limited broadcast which is a period during which the station carries out the area limited broadcast.

The updating unit 116 deletes the station information, the effective term of the area limited broadcast of which is expired, from the storage unit 115, where the term is recognized using the transmission effective start date/time and transmission effective end date/time of the station information stored in the storage unit 115.

Specifically, the updating unit 116 checks periodically the transmission effective end date/time of the station information stored in the storage unit 115, and deletes the station information, the transmission effective end date/time of which is the past as compared with the current time, from the storage unit 115.

AS described above, since the station information stored in the storage unit 115 is updated by the updating unit 116, it is possible to prevent many stations including the stations which do not perform the area limited broadcast any more from being displayed on the station list screen. This prevents user's selection of the desired station from becoming difficult.

By using the broadcasting area information of the broadcasting areas which can receive the broadcast wave from the stations corresponding to the station information contained in the station information stored in the storage unit 115, the station selecting unit 117 selects the stations that carry out the area limited broadcast receivable in a predetermined position as channel-selectable stations, channels of which are selectable, and supplies the station information on the channel-selectable stations to the channel selection control unit 118.

Herein, as described in Fig. 14, the area name of the station information, and a set of the transmission station longitude, the transmission station latitude, and the transmission power are included in the broadcasting area information.

The channel selection control unit 118 carries out the channel selection control of causing the tuner 72 (see Fig. 21) to tune in the area limited broadcast of the station corresponding to the station information using the station information supplied from the station information acquiring unit 111 and 112, and the station selecting unit 117.

The channel selection control unit 118 performs the display control of controlling the selecting unit 75 to display the station list screen which displays the station names of the channel-selectable stations, or the channel list screen which displays the service names of the area limited broadcasts (services) which are carried out by the channel-selectable stations, on the display unit 76 (see Fig. 21), by using the station information on the channel-selectable stations supplied from the station selecting unit 117.

[Station Information Acquisition Processing by Receiving Terminal 33]

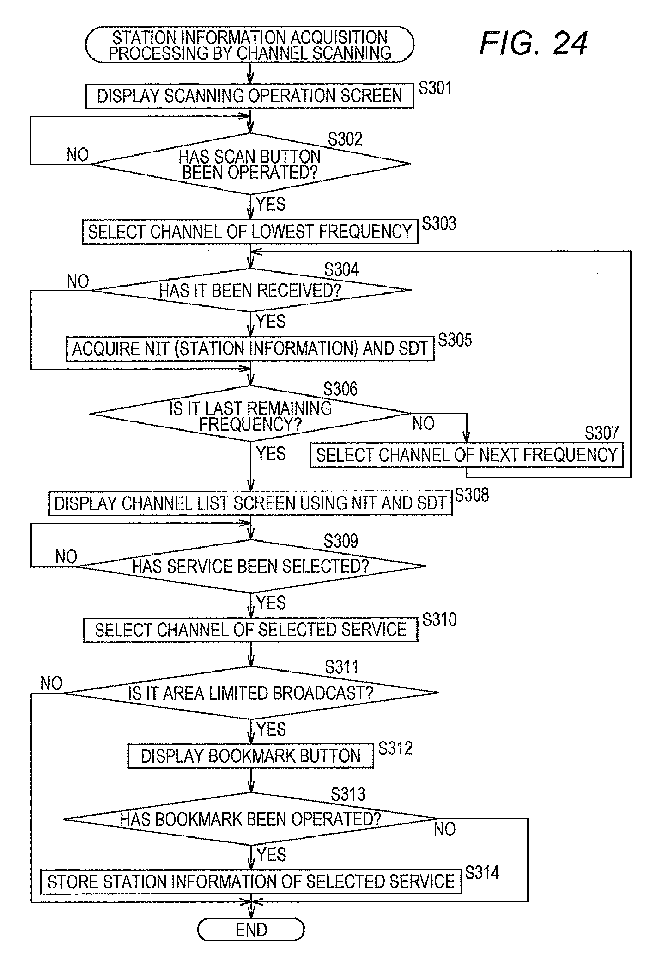

Fig. 24 is a flowchart that describes processing by which the receiving terminal 33 of Fig. 21 receives a service by acquiring the station information by scanning channels.

For example, when the user operates the operation unit 81 (Fig. 21) in order to display a scan operation screen which is a menu screen for the channel scanning, the channel selection control unit 118 (Fig. 23) will display the scan operation screen on the display unit 76 (Fig. 21) in Step S301 by controlling the selecting unit 75 (Fig. 21). Then, processing proceeds to Step S302.

In Step S302, the channel selection control unit 118 determines whether the scan button of the scan operation screen is operated.

That is, the scan operation screen is provided with the scan button which is operated at the time of performing the channel scanning, and the determination on whether the scan button was operated is made in Step S302.

When it is determined that the scan button was not operated in Step S302, the processing returns to Step S302.

In addition, when it is determined that the scan button was operated in Step S302, the processing proceeds to Step S303. Hereafter, in Steps S303 through S307, the channel scanning is performed. Moreover, not only the NIT and the SDT but also the station information are acquired.

Namely, in Step S303, the channel selection control unit 118 selects, for example, the lowest frequency among frequencies (preset frequencies) of the central segments of the respective physical channels of the terrestrial digital broadcasting as an interest frequency, and performs the channel selection control of controlling the tuner 72 so that the interest frequency may be tuned in.

Then, the processing proceeds to Step S304 from Step S303, and the channel selection control unit 118 determines whether the service at the interest frequency becomes receivable, that is, whether the tuner 72 becomes able to receive the TS as a result of the channel selection.

When it is determined that the service at the interest frequency is not receivable in Step S304, the processing skips Step S305 and proceeds to Step S306.

On the other hand, when it is determined that the service at the interest frequency is receivable in Step S304, the processing proceeds to Step S305 so that the control unit 80 may acquire the NIT and SDT along with the station information.

That is, when the tuner 72 tunes in the interest frequency according to the channel selection control of the channel selection control unit 118 and becomes able to receive the TS as a result of the channel selection, the tuner 72 supplies the TS to the demultiplexer 73. Next, the demultiplexer 73 separates the PSI from the TS supplied from the tuner 72, and supplies it to the control unit 80.

The control unit 80 acquires the NIT and the SDT which are included in the PSI supplied from the demultiplexer 73 in the way described above, and creates the channel selection table in which the channel selection information of the receivable services (the area limited broadcast, the regular one-seg broadcast), which is receivable at that time, is registered as necessary.

Furthermore, when the station information is included in the NIT which is acquired from the PSI supplied from demultiplexer 73 by the station information acquiring unit 111, the control unit 80 acquires the station information from the NIT.

Although the frequency (entry frequency) at which the area limited broadcast is carried out by the station corresponding to the station information acquired from the NIT can be recognized from the NIT in which the station information is included, in order to simplify the description herein, suppose that the entry frequency is included in the station information.

In Step S305, when the NIT, the SDT, and the station information are acquired in the way as mentioned above, the station information acquiring unit 111 supplies the NIT, the SDT, and the station information to the channel selection control unit 118, and supplies the station information to the registering unit 114. Then, the processing proceeds to Step S306.

In Step S306, the channel selection control unit 118 determines whether the interest frequency is the last frequency of the preset frequencies. Suppose that the last frequency is the highest frequency here.

When it is determined that the interest frequency is not the last frequency among the preset frequencies in Step S306, the processing proceeds to Step S307 in which the channel selection control unit 118 selects a next lowest frequency, from among the preset frequencies, which is next higher than the current interest frequency as a new interest frequency.

In Step S307, the channel selection control unit 118 performs the channel selection control of controlling the tuner 72 so that the interest frequency may be tuned, and the processing returns to Step S304.

In Step S306, when it is determined that the interest frequency is the last frequency among the preset frequencies, the processing proceeds to Step S308.

Herein, in the channel selection control, that is, when the channel selection control unit 118 controls the tuner 72 , in Steps S303 through S307, the tuner 72 may be controlled so as to tune in not only to the frequency (preset frequency) of the central segment of each physical channel of the terrestrial digital broadcasting but also to the frequency of each segment of each physical channel.

In Step S308, the channel selection control unit 118 creates the channel list screen which displays the service names of all (or part of) the services recognized from the NIT and the SDT which were obtained by the channel scanning performed by the station information acquiring unit 111, and causes it to be displayed on the display unit 76 via the selecting unit 75.

Then, the processing proceeds to Step S309 from Step S308, and the channel selection control unit 118 determines whether the operation unit 81 was operated such that any of the service names (logical channels) displayed on the channel list screen may be selected.

When it is determined that the operation unit 81 was not operated such that any of the service names displayed on the channel list screen may be selected in Step S309, the processing returns to Step S309.

When it is determined that the operation unit 81 was operated such that any of the service names displayed on the channel list screen may be selected in Step S309, the processing proceeds to Step S310 in which the channel selection control unit 118 performs the channel selection control of selecting a selected service (logical channel) (segment) which is the service of the service name selected by the operation on the operation unit 81.

That is, the channel selection control unit 118 recognizes the frequency (at which the one-seg broadcast is carried out) of the selected service from the NIT (or the channel selection table already created, when possible) of the selected service.

Next, the channel selection control unit 118 controls the tuner 72 (Fig. 21) so that the frequency of the selected service may be tuned in.

The tuner 72 tunes in the selected service according to the channel selection control of the channel selection control unit 118. When the one-seg broadcast is receivable, that is, when the TS becomes obtainable as a result of the tuning-in, the TS is supplied to the demultiplexer 73 (Fig. 21).

The demultiplexer 73 separates the video data, the audio data, and the display control information of the one-seg broadcast from the TS supplied from the tuner 72, and supplies them to the video decoder 74, the audio decoder 77, and the browser 79, respectively.

As a result, for example, the image of the selected service is displayed on the display unit 76, and the sound of the selected service is output from the speaker 78. Therefore, the user can watch the selected service.

Next, the processing proceeds to Step S311 from Step S310, and the channel selection control unit 118 determines whether the selected service is a service carried out as the area limited broadcast of the one-seg broadcast.

Herein, the determination of whether the selected service is a service carried out as the area limited broadcast of the one-seg broadcast can be made by determining, for example, whether the station information is included in the NIT of the selected service.

When it is determined that the selected service is not a service carried out as the area limited broadcast in Step S311, that is, when the station information is not included in the NIT of the selected service and thus when the selected service is a service carried out as the regular one-seg broadcast, the processing skips Step S312 through 314, and the processing ends.

When it is determined that the selected service is a service carried out as the area limited broadcast in Step S311, that is, when the station information is included in the NIT of the selected service, the processing proceeds to Step S312 in which the channel selection control unit 118 displays the bookmark button, which is to be operated for registration of the station information, on the display unit 76 via the selecting unit 75, in a superimposed manner on the image of the selected service.

Subsequently, the processing proceeds to Step S313 from Step S312, and the registering unit 114 determines whether the user has performed a bookmark operation of operating the bookmark button.

When it is determined that the bookmark operation was performed in Step S313, the processing proceeds to Step S314 in which the registering unit 114 registers into the station list of the storage units 115, the station information on the station which is carrying out the selected service of the area limited broadcast, out of the station information supplied from the station information acquiring unit 111, and then the processing ends.

When it is determined that the bookmark operation was not performed in Step S313, the processing skips Step S314 and the processing ends.

Therefore, the station information on the station carrying out the selected service of the area limited broadcast, which is acquired by the station information acquiring unit 111, is registered into the station list of the storage unit 115 only when the bookmark operation was performed.

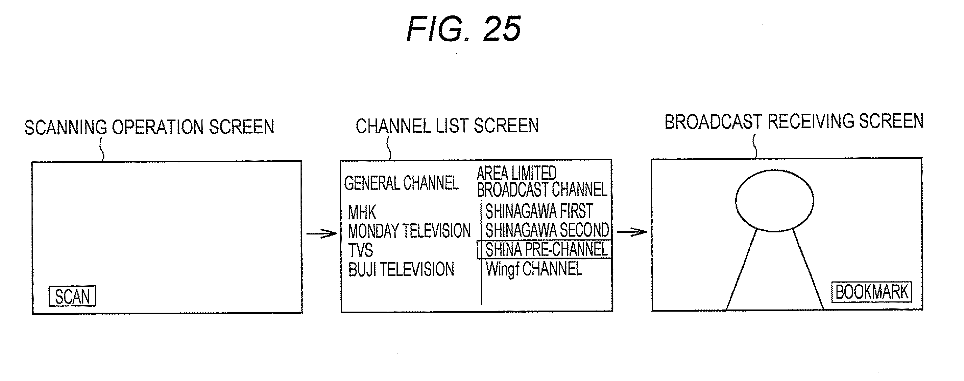

Fig. 25 is a diagram that describes a display example of the display unit 76 when the receiving terminal 33 of Fig. 21 receives the service by acquiring the station information by scanning channels.

When the user operates the operation unit 81 (Fig. 21) such that the scan operation screen may be displayed as described in Fig. 24, the scan operation screen which has a scan button will be displayed on the display unit 76 in the receiving terminal 33 as illustrated in Fig. 25.

When the user operates the scan button on the scan operation screen displayed on the display unit 76, the channel scanning will be performed in the receiving terminal 33 and the NIT and the SDT will be acquired.

Next, in the receiving terminal 33, the station information acquiring unit 111 acquires the station information from the NIT obtained at the time of scanning channels.

In the receiving terminal 33, the channel selection control unit 118 generates the channel list screen which displays the service names of services of the one-seg broadcast from the NIT and the SDT acquired through the channel scanning, and displays it on the display unit 76.

Herein, in Fig. 25, in the channel list screen, the service names of the services (general channels) of the regular one-seg broadcast and the service names of the services (area limited broadcast channels) of the area limited broadcast are separately displayed.

Then, when the user selects one of the service names (logical channels) displayed on the channel list screen, the tuner 72 will tune in the selected service by setting the service of the service name as the selected service in the receiving terminal 33.

Moreover, in the receiving terminal 33, a broadcast receiving screen is displayed on the display unit 76, in which the broadcast receiving screen displays an image of the selected service, of which the TS was receivable, as a result of the tuning-in by the tuner 72.

When the selected service is a service of the area limited broadcast, the bookmark button is further displayed on the broadcast receiving screen. When the bookmark button is operated, in the receiving terminal 33, the registering unit 114 registers into the station list of the storage units 115, the station information on a station which is carrying out the area limited broadcast of the selected service, out of the station information acquired by the station information acquiring unit 111.

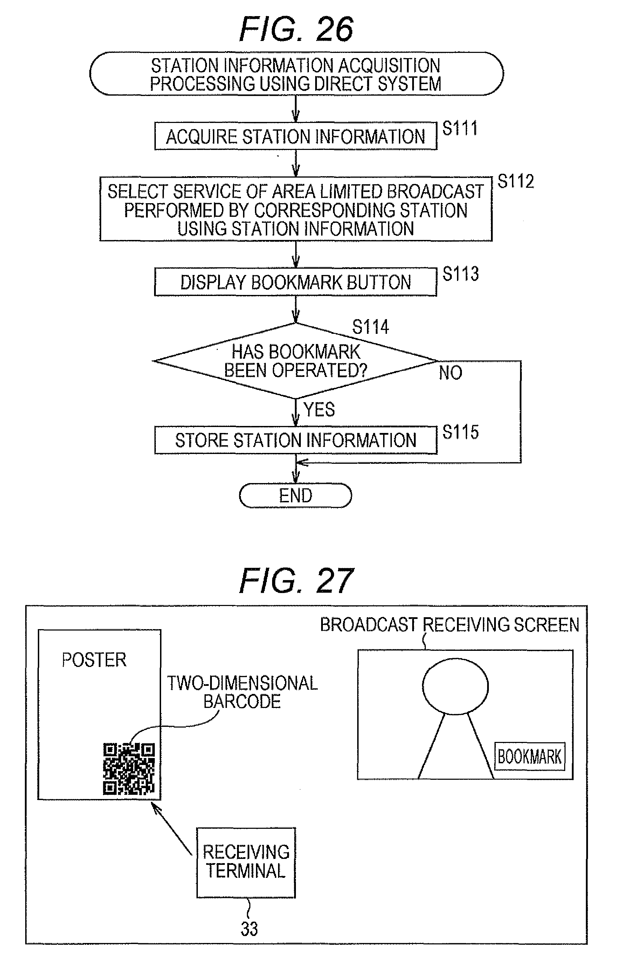

Fig. 26 is a flowchart that describes processing in which the receiving terminal 33 of Fig. 21 acquires the station information by the direct system to receive a service.

For example, when the user operates the operation unit 81 to acquire the station information by the direct system, for example, when the user brings the receiving terminal 33 into close contact with a barcode of a poster in which the station information on a predetermined station is printed in the form of a barcode, in Step S111, the station information acquiring unit 112 (Fig. 23) acquires the station information by reading the barcode, and supplies it to the registering unit 114 and the channel selection control unit 118. Then, the processing proceeds to Step S112.

In Step S112, the channel selection control unit 118 performs the channel selection control of selecting the service which is the area limited broadcast carried out at the entry frequency of the station information, using the station information supplied from the station information acquiring unit 112.

That is, the channel selection control unit 118 controls the tuner 72 (Fig. 21) so that the entry frequency of the station information supplied from the station information acquiring unit 112 may be tuned in.

The tuner 72 tunes in the entry frequency according to the channel selection control of the channel selection control unit 118, and, when the area limited broadcast is receivable at the entry frequency, (i.e., when the TS of the area limited broadcast can be obtained as a result of the channel selection), the tuner 72 supplies the TS to the demultiplexer 73.

The demultiplexer 73 separates the video data, the audio data, and the display control information of the area limited broadcast from the TS supplied from the tuner 72, and supplies them to the video decoder 74, the audio decoder 77, and the browser 79, respectively.

As a result, the image of the service (hereinafter, referred to as a direct acquisition service) which is the area limited broadcast carried out at the entry frequency of the station information acquired by the station information acquiring unit 112 is displayed on the display unit 76, and the sound of the direct acquisition service is output from the speaker 78, so that the user can watch the direct acquisition service.

Then, the processing proceeds to Step S113 from Step S112, and, like the case of Fig. 24 and Fig. 25, the channel selection control unit 118 displays the bookmark button on the display unit 76 via the selecting unit 75 so that the bookmark button may be superimposed on the image of the direct acquisition service. Then, the processing proceeds to Step S114.

In Step S114, the registering unit 114 determines whether the bookmark operation of operating the bookmark button was performed.

When it is determined that the bookmark operation was performed in Step S114, the processing proceeds to Step S115 in which the registering unit 114 registers into the station list of the storage units 115, the station information supplied from the station information acquiring unit 112, i.e., the station information on a station which is carrying out the area limited broadcast of the direct acquisition service. After that, the processing ends.

In Step S114, when it is determined that the bookmark operation was not performed, the processing skips Step S115 and ends.

Therefore, the station information acquired by the station information acquiring unit 112 is registered into the station list of the storage unit 115 only when the bookmark operation is performed.

Fig. 27 is a diagram that describes a display example of the display unit 76 when the receiving terminal 33 in Fig. 21 receives a service by acquiring the station information by the direct system.

The user operates the operation unit 81 so that the station information may be acquired by the direct system. For example, when the receiving terminal 33 is brought into close contact with the barcode of the poster in which the station information on a predetermined station is printed in the form of the barcode, in the receiving terminal 33, the station information acquiring unit 112 (Fig. 23) acquires the station information by reading the barcode, and supplies it to the registering unit 114 and the channel selection control unit 118.

The channel selection control unit 118 performs the channel selection control which selects the service (direct acquisition service) of the area limited broadcast carried out at the entry frequency of the station information using the station information supplied from the station information acquiring unit 112. The tuner 72 tunes in the direct acquisition service according to the control of the channel selection control unit 118.

Next, in the receiving terminal 33, a broadcast receiving screen, on which the image of the direct acquisition service the TS of which was receivable is displayed, is displayed on the display unit 76 as a result of the channel selection by the tuner 72.

A bookmark button is further displayed on the broadcast receiving screen. When the bookmark button is operated, in the receiving terminal 33, the registering unit 114 registers into the station list of the storage units 115, the station information (station information on a station which is carrying out the area limited broadcast of the direct acquisition service) acquired by the station information acquiring unit 112.

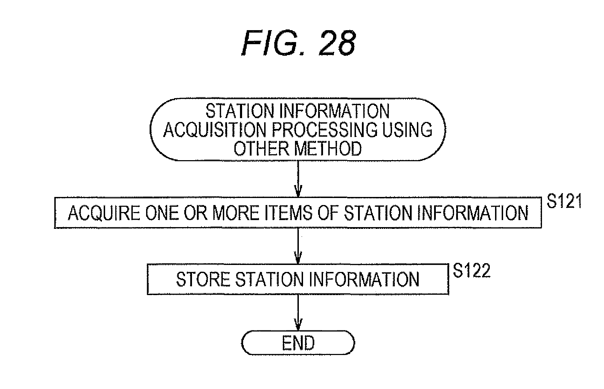

Fig. 28 is a flowchart that describes processing in which the receiving terminal 33 in Fig. 21 acquires the station information by another method.

In Step S121, as described in Fig. 23 explained, the station information acquiring unit 113 (Fig. 23) acquires the station information by another method, and supplies it to the registering unit 114. Then, the processing proceeds to Step S122.

In Step S122, the registering unit 114 registers all the station information supplied from the station information acquiring unit 113 into the station list of the storage units 115, and the processing ends.

Therefore, all the station information acquired by the station information acquiring unit 113 is registered into the station list of the storage units 115.

However, among the station information acquired by the station information acquiring unit 113, only the station information requested to be registered by the user may be registered into the station list of the storage unit 115 like the station information acquired by the station information acquiring units 111 and 112.

[Channel Selection Processing using Station Information]

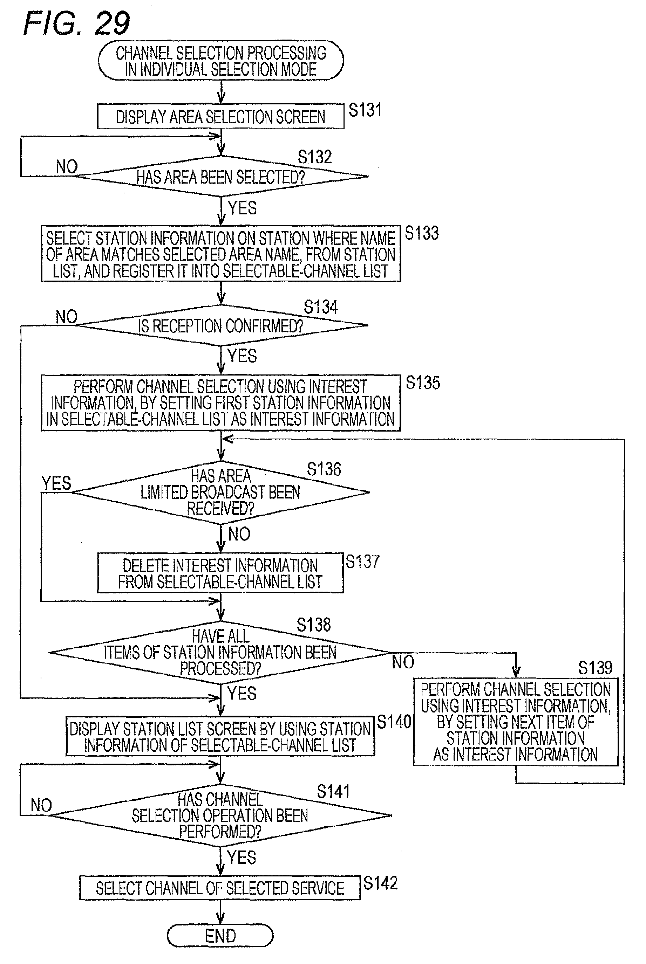

Fig. 29 is a flowchart that describes channel selection processing which selects a channel using station information in the receiving terminal 33.

Herein, modes of channel selection processing include individual selection mode, sequential selection mode, map display mode, and GPS mode, and the flowchart of Fig. 29 illustrates the channel selection processing in the individual selection mode.

A mode in which the channel selection processing is performed is selected, for example, in a manner that the user operates the operation unit 81.

In Step S131, the channel selection control unit 118 generates a local area selection screen, and displays on the display unit 76.

Namely, the station selecting unit 117 selects the station information registered in the station list stored in the storage unit 115 one by one as interest station information to be paid attention, and selects an area name (see Fig. 14) of the interest station information as a display name of a local area which is displayed in the local area selection screen.

The station selecting unit 117 does not select an area name which is identical to the area name already selected as the display name of a local area, as the display name of a local area.

The station selecting unit 117 will supply a list of the display names of local areas to the channel selection control unit 118, when the display names of the local areas are selected for all the station information registered in the station list stored in the storage unit 115, that is, all the station information is used as the interest station information.

The channel selection control unit 118 generates the local area selection screen which displays the list of the display names of the local areas supplied from the station selecting unit 117, and displays it on the display unit 76.

In Step S131, when the local selection screen is displayed, the processing proceeds to Step S132 in which the station selecting unit 117 determines whether any area name is selected as the display name of a local area displayed in the local area selection screen by user's operation using the operation unit 81.

Herein, when many display names of the local areas are displayed on the local area selection screen, it is likely to be difficult for the user to select a desired display name of a local area.

Therefore, the number of the display names of the local areas displayed on the local area selection screen can be restricted.

Namely, when the station selecting unit 117 has a function which acquires a present location, such as GPS (Global Positioning System), for example, the station selecting unit 117 may supply only the display names of the local areas near the present location to the channel selection control unit 118. In this way, the display names of the local areas to be displayed on the local area selection screen may be restricted only to the display names of the local areas near its present location.

When it is determined that any display name of a local area among the display names displayed on the local area selection screen is not selected in Step S132, the processing returns to Step S132.

When it is determined that any one of the display names displayed on the local area selection screen is selected in Step S132, the processing proceeds to Step S133, and the station selecting unit 117 selects the station information, the area name of which matches a selected area name, from among the station information registered in the station list of the storage unit 115, taking the display area name selected from the local area selection screen as the selected area name.

Furthermore, the station selecting unit 117 registers the station information, which was selected from among the station information registered in the station list of the storage unit 115 and of which the area name matches the selection area name, into the selectable channel list in which the station information on channel selectable stations is registered, and supplies the station information to the channel selection control unit 118. Then, the processing proceeds to Step S134.

In Step S134, the channel selection control unit 118 determines whether to or not to check for reception of (the area limited broadcast by) the channel-selectable station, that is, the station, the station information of which is registered in the selectable channel list supplied from the station selecting unit 117.

Here, the checking for reception of the channel-selectable station means an operation of checking whether the area limited broadcast by the channel-selectable station is actually received, that is, checking whether the TS of the area limited broadcast can be obtained when the area limited broadcast by the channel-selectable station is selected.

Whether to or not to perform the checking for reception can be set by operating the operation unit 81, for example.

When it is determined that the checking for reception is not performed in Step S134, the processing skips Steps S135 through S139 and proceeds to Step S140, without performing the checking for reception.

When it is determined that the checking for reception is performed in Step S134, the processing proceeds to Step S135 and the checking for reception is performed in Steps S135 through S139.

That is, in Step S135, the channel selection control unit 118 selects first station information on the selectable channel list supplied from the station selecting unit 117 as interest station information (hereinafter, referred to as interest information).

In Step S135, the channel selection control unit 118 performs the channel selection control which controls the tuner 72 so that the service, which is the area limited broadcast carried out at the entry frequency of the interest station information, may be selected using the interest station information.

Then, the processing proceeds to Step S136 from Step S135, and the channel selection control unit 118 determines whether the service, which is the area limited broadcast carried out at the entry frequency of the interest station information, was receivable, that is, whether, as a result of the channel selection, the TS was obtainable in the tuner 72.

When it is determined that the service, which is the area limited broadcast carried out at the entry frequency of the interest station information, was not receivable in Step S136, the processing proceeds to Step S137 and the channel selection control unit 118 deletes the interest station information from the selectable channel list. Then the processing proceeds to Step S138.

That is, for example, although the present location is within the broadcasting area of the interest station which is a station corresponding to the interest station information, when the TS of the service of the area limited broadcast carried out by the interest station is not obtainable, for the reason that an obstacle, such as a building, exists between the interest station and the present location, or for the reason that the present location is too much far from the interest station, the channel selection control unit 118 deletes the interest station information from the selectable channel list and excludes the interest station from the channel-selectable stations.

When it is determined that the service of the area limited broadcast carried out at the entry frequency of the interest station information was receivable in Step S136, the processing skips Step S137 and proceeds to Step S138 in which the channel selection control unit 118 determines whether all the station information on the selectable channel list was used as the interest station information.

When it is determined that there still remains any station information which has not been used as the interest station information out of the station information on the selectable channel list in Step S138, the processing proceeds to Step S139, and the channel selection control unit 118 selects station information which is next to the current interest station information, out of the station information on the selectable channel list, as new interest station information.

In Step S139, the channel selection control unit 118 performs the channel selection control which controls the tuner 72 so that the service of the area limited broadcast, which is carried out at the entry frequency of the interest station information, may be selected using the interest station information, and the processing returns to Step S136.

In addition, when it is determined that all the station information on the selectable channel list are used as the interest station information in Step S138, that is, when the checking for reception is completed for all the station information on the selectable channel list, the processing proceeds to Step S140, and the channel selection control unit 118 generates the station list screen and displays it on the display unit 76.

That is, in Step S140, the channel selection control unit 118 recognizes the station name (Fig. 14) of the channel-selectable station from the station information on the selectable channel list.

Subsequently, the channel selection control unit 118 generates the station list screen where the station names of the channel-selectable stations are listed, and causes it to be displayed on the display unit 76, and the processing proceeds to Step S141 from Step S140.

Herein, as for the station information acquired by the channel scanning described in Fig. 24 or the station information acquired by the direction system described in Fig. 26, all the station information can be stored in (the station list of) the storage unit 115.

However, when all the station information acquired by the channel scanning or all the station information acquired by the direct system is stored in the storage unit 115, a huge amount of the station information may be registered into the selectable channel list.

Therefore, when a huge amount of the station information is registered into the selectable channel list, a large number of station names are displayed on the station list screen. However, the display of a large number of station names hinders the user from discovering a desired station, that is, a desired service.

So, as for the station information acquired by the channel scanning or the station information acquired by the direct system, as described above, only the station information which has been bookmarked may be stored in the storage unit 115 in the receiving terminal 33.

In this way, that is, by storing only the station information which were bookmarked, i.e., only the station information requested by the user to be stored in the storage unit 115; only a small number of stations narrowed down from the stations of the station information acquired by scanning channels, or stations of the station information acquired by the direct system, that is, only (station names of) stations of the services which were watched once by the user or which were bookmarked are displayed in the selectable channel list, i.e., on the station list screen.

Therefore, the user can discover easily a desired station, i.e., a desired service.

With regard to the station information acquired by the channel scanning, or the station information acquired by the direct system, as described above, only the station information on which the bookmark operation was performed is stored in the storage unit 115, or all the station information may be stored in the storage unit 115.

Whether all the station information acquired by the channel scanning, or the station information acquired by the direct system are stored in the storage unit 115, or whether only the station information on which bookmark operation was performed is stored in the storage unit 115 may be set by user's operation.

When the channel selection control unit 118 determines whether the user performed the channel selection operation or not in Step S141, and determines that the user did not perform the channel selection operation, the processing returns to Step S141.

Herein, the channel selection operation is an operation of selecting a station, or selecting a service which is carried out as the area limited broadcast by the station.

That is, the user can select the station name of a desired station (channel-selectable station) by operating the operation unit 81 from among the station names displayed on the station list screen.

When the user selects one of the station names displayed on the station list screen, the channel selection control unit 118 recognizes the service name and the frequency of one or more services of the area limited broadcast carried out by the station, from the NIT and the SDT (or from the channel selection table created already, if possible) which are transmitted through the segment (representative segment) of the entry frequency (Fig. 14) of the station information on a selected station which is a station (channel-selectable station) having a station name selected by the user.

The channel selection control unit 118 generates the channel list screen where the service names of one or more services which are carried out as the area limited broadcast by the selected station are displayed, and causes it to be displayed on the display unit 76.

The user can select the service name of the desired service by operating the operation unit 81 from among the service names displayed on the channel list screen.

If the user selects one of the service names displayed on the channel list screen, the channel selection control unit 18 will perform the channel selection control which controls the tuner 72 so that the selected service (logical channel) (segment), the service name of which is selected by the user, may be tuned in.

Thereby, for example, in the way described with reference to Step S310 of Fig. 24, the image of the selected service is displayed on the display unit 76 and the sound of the selected service is output from the speaker 78.

In Step S141, it is determined whether the channel selection operation was performed or not, that is, whether selection of the station name of a to-be-selected station from among the station names displayed on the station list screen was made or not and whether selection of the service name of a to-be-selected service from among the service names of the services, which are carried out as the area limited broadcast by the selected station, displayed on the channel list screen was made or not.

When it is determined that channel selection operation was performed in Step S141, that is, when one station is selected from the station list screen as a selected station, and when one service is selected, as a selected service, from the channel list screen where service names of one or more services carried out as the area limited broadcast by the selected service are displayed, the processing proceeds to Step S142, and the channel selection control unit 118 performs the channel selection control which controls the tuner 72 so that the selected service may be tuned in. Then, the channel selection processing in the individual selection mode ends.

As described above, in the receiving terminal 33, the station information acquiring units 111 through 113 acquire the station information, and the station information is stored in the storage unit 115.

Moreover, by using the area name as the broadcasting area information contained in the station information stored in the storage unit 115, in the station selecting unit 117, the station having an area name which matches the display area name selected by the user, i.e., the station which is carrying out the receivable area limited broadcast at the position of the display area name selected by the user chose, is selected as a channel-selectable station of which the channels are selectable, and the station name is registered into the selectable channel list.

The station list screen, where the station names registered in the selectable channel list are displayed as information on the channel-selectable stations, is displayed by the channel selection control unit 118. Then, the channel selection control is performed with respect to the service (selected service) which is the area limited broadcast carried out by the channel-selectable station which the user selected from the station list screen and the channel list screen.

Therefore, in the receiving terminal 33, after the station information is acquired, receivable area limited broadcasts (services) at the position of the display area name selected by the user can be promptly presented in the form of the station list screen and/or the channel list screen.

Furthermore, as described above, since a small number of stations narrowed down from the station information acquired by the cannel scanning and the station information acquired by the direct system are listed in the selectable channel list, e.g., displayed on the station list screen, that is, since only the stations (station names) of services which were watched by the user once and on which the bookmark operation was performed are registered, the receiving terminal 33 can present the receivable area limited broadcasts at the position of the display area name selected by the user, to the user so that the user can easily discover the desired area limited broadcast.

When the checking for reception is not performed, there is a possibility that the service which is carried out as the area limited broadcast by the channel-selectable station, which is selected by the user using the station list screen and the channel list screen, cannot be received.

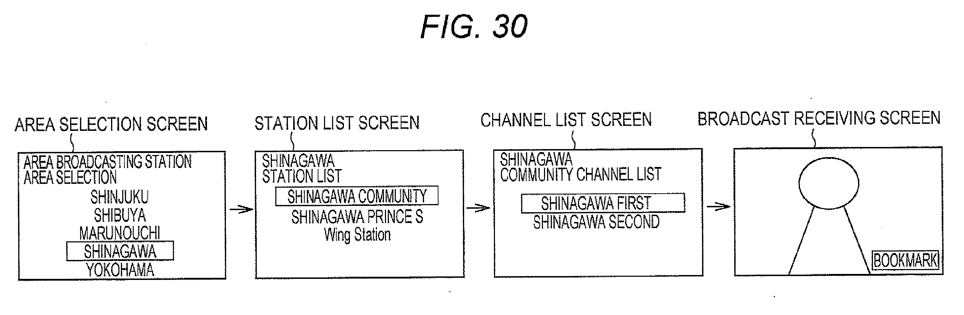

Fig. 30 is a diagram that illustrates a display example of the display unit 76 when the channel selection processing is performed in the individual selection mode in the receiving terminal 33 of Fig. 21.

In the individual selection mode, as described in Fig. 29, the local area selection screen where the area name of the station information is displayed as the display area name is displayed on the display unit 76.

If the user selects one of the display area names displayed in the local area selection screen, a station, where the area name of the station information registered in the station list of the storage unit 115 matches the selected area name which is the display area name selected from the local area selection screen, is set as the channel-selectable station, and the station list screen where the station name of the channel-selectable station is displayed is displayed on the display unit 76.

Herein, in Fig. 30, the display area names "Shinjuku", "Shibuya", "Marunouchi", "Shinagawa", and "Yokohama" are displayed on the local area selection screen, and the display area name ""Shinagawa" is selected.

Next, in Fig. 30, as the station where the area name of the station information is "Shinagawa", there are three stations, the station names of which are "Shinagawa Community, "Shinagawa Princes S", and "Wing Station". Thus, the station names "Shinagawa Community", "Shinagawa Princes "S", and "Wing Station" are displayed in the station list screen.

When the user selects one of the station names displayed on the station list screen, the channel list screen is displayed on the display unit 76, where the channel list screen displays the service names of one or more services which are carried out as the area limited broadcast by the selected station, which is the station (channel-selectable station) having the station name selected by the user.

Here, the station name "Shinagawa Community" is selected in Fig. 30.

Under the station name "Shinagawa community", two services, that is, the area limited broadcast with services names "Shinagawa First" and "Shinagawa Second", are provided. In the channel list screen, the service names "Shinagawa First" and "Shinagawa Second" are displayed.

When the user selects the service name of a desired service from among the service names displayed on the channel list screen, the tuner 72 receives the selected service which is the service with the service name selected by the user, and a broadcast receiving screen, where the image of the selected service is displayed, is displayed on the display unit 76.

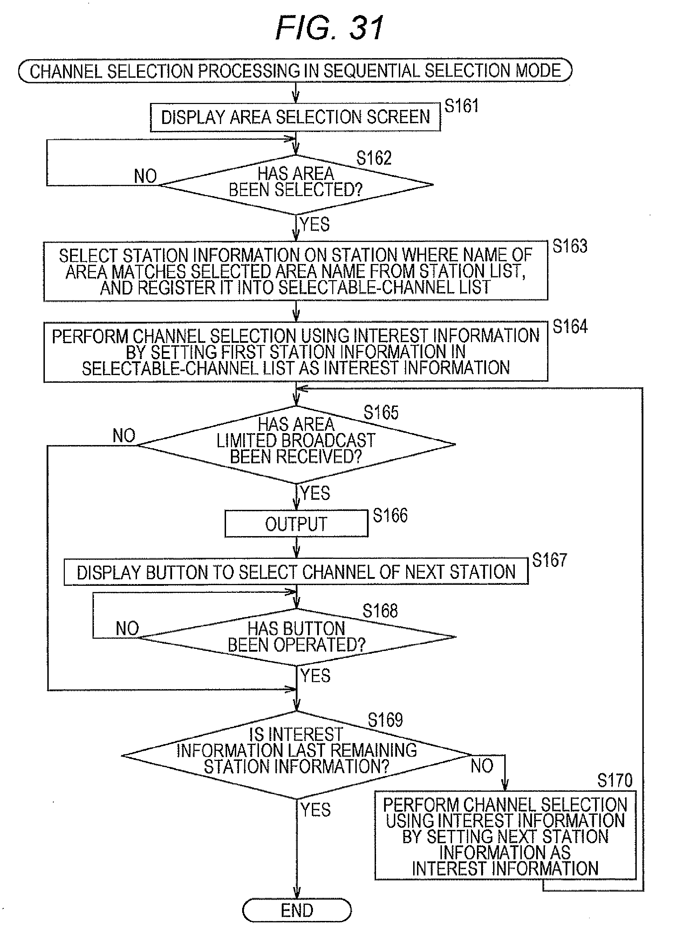

Fig. 31 is a flowchart of the channel selection processing in the sequential selection mode performed using the station information, which is one of the channel selection processing performed in the receiving terminal 33.

In the channel selection processing in the sequential selection mode, in Steps S161 through S163, the same processing as Steps S131 through S133 of Fig. 29 is performed.

Namely, when the location area selection screen is displayed on the display unit 76 and the area name as one of the display area names displayed in the local area selection screen is selected by the user; the display area name selected from the local area selection screen is used as the selected area name, and the station information, where the area name matches the selected area name, is selected as the station information on the channel-selectable station from among the station information registered in the station list of the storage unit 115, and is registered into the selectable channel list.

Then, in Step S164, the channel selection control unit 118 selects the first station information on the selectable channel list as the interest station information.

In Step S164, the channel selection control unit 118 performs, using the interest station information, the channel selection control which controls the tuner 72 so that the service which is carried out as the area limited broadcast at the entry frequency of the interest station information may be selected, and the processing proceeds to Step S165.

In Step S165, the channel selection control unit 118 determines whether the TS was able to be obtained or not in the tuner 72 as a result of the channel selection, that is, whether the service which is carried out as the area limited broadcast at the entry frequency of the interest station information was able to be received.

In Step S165, when it is determined that the service which is carried out as the area limited broadcast at the entry frequency of the interest station information was not able to be received, the processing skips Steps S166 through S168, and proceeds to Step S169.

When it is determined that the service which is carried out as the area limited broadcast at the entry frequency of the interest station information was able to be received in Step S165, the processing proceeds to Step S166, and the channel selection control unit 118 causes the service, which is carried out as the area limited broadcast at the entry frequency of the interest station information, to be output from the display unit 76 and the speaker 78.

That is, the channel selection control unit 118 causes the image of the service, the TS of which was able to be obtained by the tuner 72, to be displayed on the display unit 76 and the sound of the service to be output from the speaker 78.

Then, the processing proceeds to Step S167 from Step S166, and, the channel selection control unit 118 causes not only the image of the service, which is carried out as the area limited broadcast at the entry frequency of the interest station information, to be displayed but also the button "next ch" to be displayed on the display unit 76, where the button "next ch" is used to select the service which is carried out as the area limited broadcast by the station corresponding to the next station information on the selectable channel list. Then the processing proceeds to Step S168.

In Step S168, when the channel selection control unit 118 determines whether the button "next ch" was operated. When it is determined that the button was not operated, the processing returns to Step S168.

When it is determined that the button "next ch" was operated in Step S168, the processing proceeds to Step S169 and the channel selection control unit 118 determines whether all the station information on the selectable channel list was used as the interest station information.

When it is determined that there still remains the station information which has not been used as the interest station information, among the station information on the selectable channel list in Step S169, the processing proceeds to Step S170, the channel selection control unit 118 selects the station information next to the current interest station information as new interest station information, from among the station information on the selectable channel list.

In Step S170, the channel selection control unit 118 performs, using the interest station information, the channel selection control which controls the tuner 72 so that the service, which is carried out as the area limited broadcast at the entry frequency of the interest station information, may be tuned in, and the processing proceeds to Step S165.

In Step S169, when it is determined that all the station information on the selectable channel list has been used as the interest station information, the channel selection processing in selection mode ends.

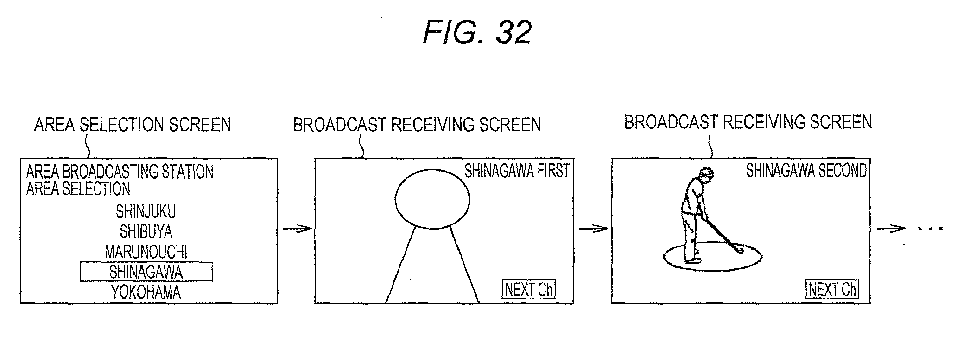

Fig. 32 is a diagram that illustrates a display example of the display unit 76 when the channel selection processing in the sequential selection mode is performed in the receiving terminal 33 of Fig. 21.

In the sequential selection mode, as described in Fig. 31, the local area selection screen, where area names of the station information are displayed as display area names, is displayed on the display unit 76.

When the user selects one of the display area names displayed on the local area selection screen, the station having the area name which is present in the station information registered in the station list of the storage unit 115 and which matches the selected area name which is the display area name selected from the local area selection screen is taken as the channel-selectable station, and the station information on the channel-selectable station is registered into the selectable channel list.

Next, the first station information on the selectable channel list is selected as the interest station information, and the service which is carried out as the area limited broadcast at the entry frequency of the interest station information is selected.

When the TS of the service which is carried out as the area limited broadcast at the entry frequency of the interest station information is able to be obtained as a result of the channel selection, the broadcast receiving screen where the image of the service is displayed is displayed on the display unit 76, the sound of the service is output from the speaker 78.

The button "next ch" is displayed on the broadcast receiving screen.

When the button "next ch" is operated by the user, the station information next to the current interest station information is selected from among the station information on the selectable channel list as new interest station information, and the service which is carried out as the area limited broadcast at the entry frequency of the interest station information is selected.

When the TS of the service which is carried out as the area limited broadcast at the entry frequency of the interest station information is able to be obtained as a result of the channel selection, the broadcast receiving screen where the image of the service is displayed is displayed on the display unit 76, the sound of the service is output from the speaker 78.

Like the above-mentioned case, the broadcast receiving screen is provided with the button "next ch". As described below, whenever the button "next ch" is operated, the services, which are carried out as the area limited broadcast by the channel-selectable stations where the station information is registered in the selectable channel list are subjected to the channel selection one by one.

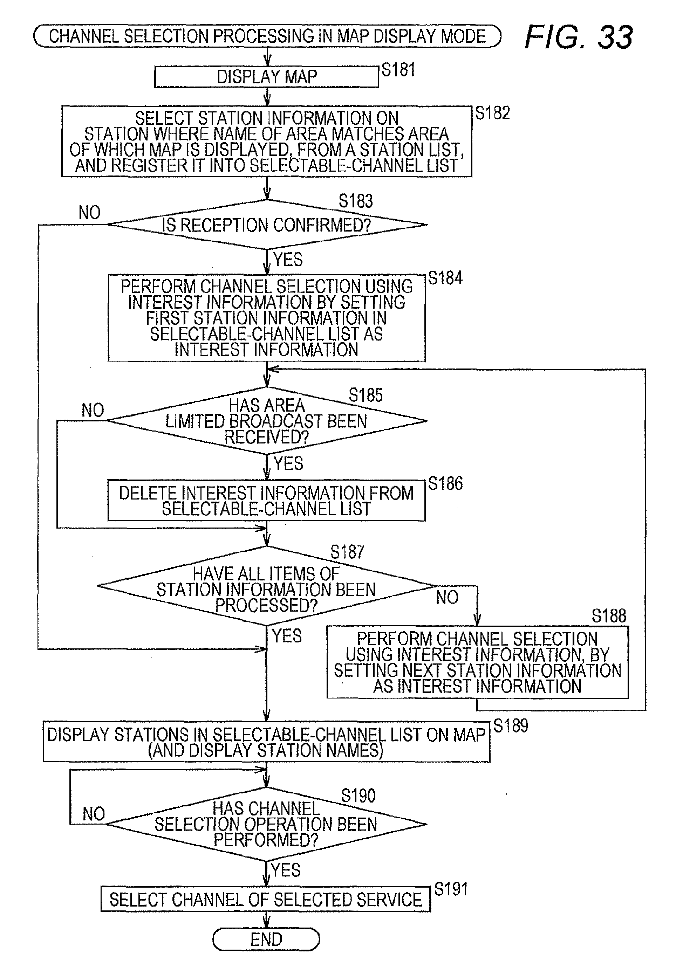

Fig. 33 is a flowchart that describes channel selection processing in map display mode out of the channel selection processing which performs the channel selection using the station information, in the receiving terminal 33.

In Step S181, according to user's operation, the channel selection control unit 118 displays a map on the display unit 76, and the processing proceeds to Step S182.

Namely, the channel selection control unit 118 will display the map of a predetermined area on the display unit 76 according to the operation when data of the map is stored in a built-in memory and when the operation unit 81 is operated by the user so that, for example, the map of the predetermined area may be displayed.

In Step S182, the station selecting unit 117 takes an area name of a local area included in the map displayed on the display unit 76 as an interest area name to be paid attention, and selects the station information where the area name matches the interest area name, from among the station information recorded in the station list of the storage unit 115

Moreover, the station selecting unit 117 registers the station information where the area name matches the interest area name, which is selected from among the station information registered in the station list of the storage unit 115, into the selectable channel list in which the station information on the channel-selectable stations is registered, and supplies it to the channel selection control unit 118. Then, the processing proceeds to Step S183.

In Step S183, the channel selection control unit 118 determines whether to or not to check the reception like the case of Step S134 of Fig. 29.

When it is determined that the checking for reception is not to be performed in Step S183, the processing proceeds to Step S189 by skipping Steps S184 through S188, without performing the checking for reception.

When it is determined that the checking for reception is to be performed in Step S183, the processing proceeds to Step S184 and the checking for reception is performed in Steps S184 through S188 in the same way as Steps S135 through S139 of Fig. 29, respectively.

Next, in Steps S184 through S188, after the checking for reception is completed, in Step S189, with respect to the channel-selectable stations which are stations of which the station information is registered in the selectable channel list, the channel selection control unit 118 displays marks that represent the channel-selectable stations on the map of the display unit 76, especially at the positions of the channel-selectable stations expressed by the transmission station longitude and the transmission station latitude included in the station information on the channel-selectable stations.

The station names of the channel-selectable stations can also be displayed on the display unit 76 along with the map and the marks indicating the channel-selectable stations.

Then, the processing proceeds to Step S190 from Step S189, and the channel selection control unit 118 determines whether the user performed a channel selection operation of selecting the station and selecting the service which is carried out as the area limited broadcast by the station. When it is determined that the channel selection operation was not performed, the processing proceeds to Step S190.

That is, the user can select the desired station (channel-selectable station) from among the stations, of which the marks and/or station names are displayed on the map, on the display unit 76 by operating the operation unit 81.

When the user selects the desired station from among the stations, of which the marks and/or the station names are displayed on the map, on the display unit 76, the channel selection control unit 118 recognizes the frequency and the service name of one or more services that are the area limited broadcast carried out by the selected station, from the NIT and SDT (or the channel selection table created already, if possible) which are transmitted through the segment (representative segment) of the entry frequency (Fig. 14) of the station information on the selected station which is a station (channel-selectable station) selected by the user.

In addition, the channel selection control unit 118 generates the channel list screen to display the service names of one or more services which are the area limited broadcast carried out by the selected station and causes it to be displayed on the display unit 76.

The user can select the service name of the desired service from among the service names displayed on the channel list screen by operating the operation unit 81.

When the user selects one of the service names displayed on the channel list screen, the channel selection control unit 118 will perform the channel selection control which controls the tuner 72 so that the selected service (logical channel) (segment) which is the service having the service name selected by the user may be tuned in.

Thereby, for example, as described in Step S310 of Fig. 24, the image of the selected service is displayed on the display unit 76 and the sound of the selected service is output from the speaker 78.

In Step S190, it is determined whether the channel selection operation was performed, where the channel selection operation includes an operation of selecting the selected station from the map, and an operation of selecting the selected service from among services which are the area limited broadcast carried out by the selected station and of which service names are displayed on the channel list screen.

When it is determined that the channel selection operation was performed in Step S190, that is, when one station on the map is selected as the selected station and when one service is selected, as the selected service, from the channel list screen where the service names of one or more services, which are the area limited broadcast carried out by the selected station, are displayed, the processing proceeds to Step S191, and the channel selection control unit 118 performs the channel selection control which controls the tuner 72 so that the selected service may be tuned in, and the channel selection processing in the map display mode is finished.

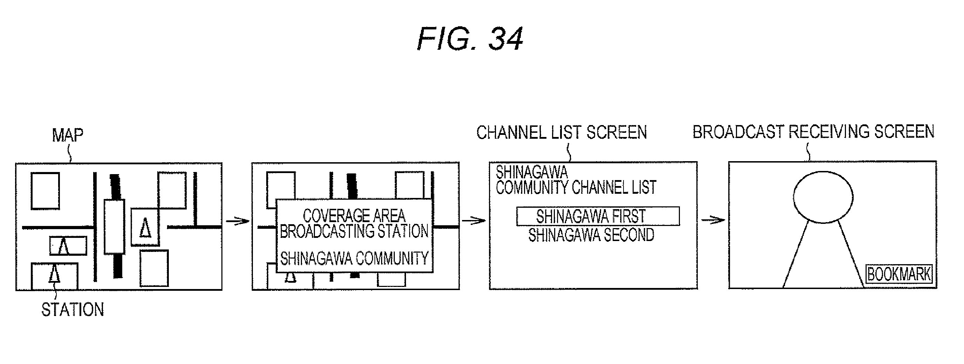

Fig. 34 is a diagram that illustrates a display example of the display unit 76 when the channel selection processing in the map display mode is performed in the receiving terminal 33 of Fig. 21.

In the map display mode, as described in Fig. 33, a map is displayed on the display unit 76.

In the map display mode, marks (triangular marks in Fig. 34) representing the channel-selectable stations are displayed on the map of the display unit 76 so as to correspond to the positions of the channel-selectable stations.

When the user performs an operation, a so-called focusing operation, on the mark representing one of the channel-selectable stations on the map, the station name ("Shinagawa Community" in Fig. 34) of the channel-selectable station corresponding to the mark is displayed on the map of the display unit 76 in a superimposed manner, for example.

When the user selects one of the channel-selectable stations whose marks are displayed on the map, the channel list screen, where the service names of one or more services which are the area limited broadcast performed by the selected station selected by the user, are displayed on the display unit 76.

When the user selects the service name of the desired service from among the service names displayed on the channel list screen, the tuner 72 receives the selected service which is the service, of which the service name is selected, and the broadcast receiving screen, where the image of the selected service is displayed, is displayed on the display unit 76.

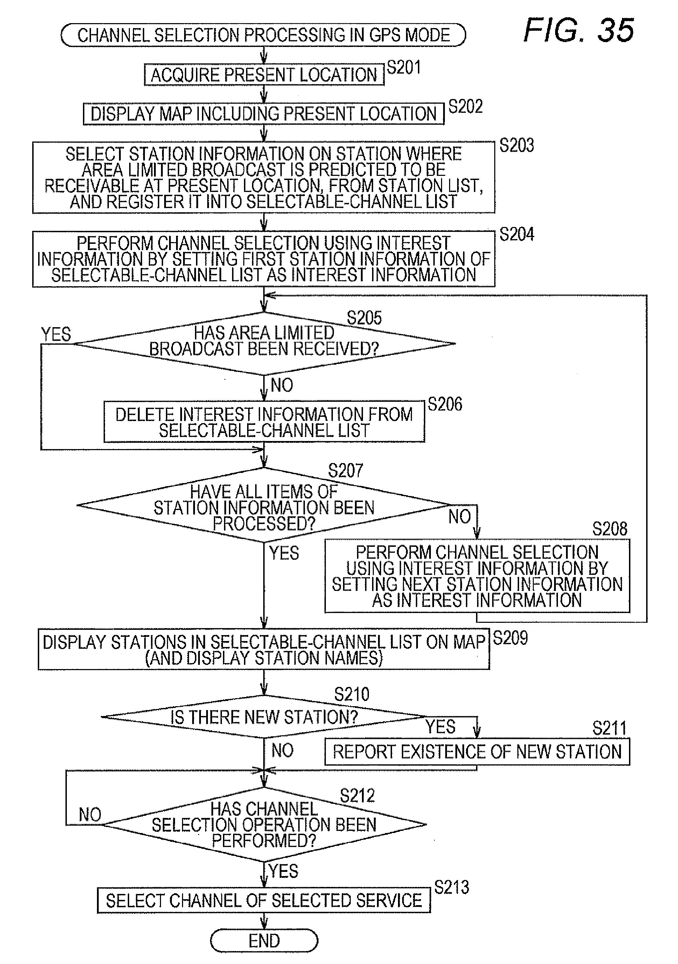

Fig. 35 is a flowchart that describes the channel selection processing in the GPS mode among the channel selection processing which perform the channel selection using the station information, in the receiving terminal 33.

In performing the channel selection processing in the GPS mode, the station selecting unit 117 has a function of acquiring the present location, such as GPS, for example.

In Step S201, the station selecting unit 117 acquires the present location (of the receiving terminal 33), and supplies it to the channel selection control unit 118. Then the processing proceeds to Step S202.

In Step S202, the channel selection control unit 118 displays the map containing the present location supplied from the station selecting unit 117 on the display unit 76. Then the processing proceeds to Step S203.

That is, the channel selection control unit 118 stores data of the map in a built-in memory, and causes the display unit 76 to display the map of a predetermined range including the present location supplied from the station selecting unit 117.

In Step S203, the station selecting unit 117 selects the station information on the station which is carrying out the area limited broadcast which is predicted to be receivable in the present location, from among the station information registered in the station list of the storage unit 115.

That is, the station selecting unit 117 sequentially selects the stations, of which the station information is registered in the station list of the storage unit 115, one by one as the interest station which is to be paid attention.

The station selecting unit 117 calculates, as the broadcasting area of the interest station, the area of a circle which has a radius proportional to the transmission power and which centers on the position (interest station) specified by the transmission station longitude and the transmission station latitude, based on the transmission power, the transmission station longitude, and the transmission station latitude of the station information on the interest station.

When the broadcasting area of the interest station includes the present location, the station selecting unit 117 selects the station information from among the station information registered in the station list of the storage unit 115, assuming that the interest station is a station which is carrying out the area limited broadcast predicted to be receivable in the present location.

The station selecting unit 117 sets the station selected from the station information registered in the station list of the storage unit 115 as the channel-selectable station, and registers the station information on the channel-selectable station into the selectable channel list, and supplies it to the channel selection control unit 118.

Then, the processing proceeds to Step S204 from Step S203, and the checking for reception is performed in Steps S204 through S208 in the same way as Steps S135 through S139 of Fig. 29, respectively.

When the checking for reception is completed through Steps S204 through S208, in Step S209, the channel selection control unit 118 causes the mark and the station name that represent the channel-selectable station which is a station, of which the station information is registered in the selectable channel list, to be displayed on the display unit 76 like the case of Step S189 of Fig. 33.

Then, the processing proceeds to Step S210 from Step S209, and the channel selection control unit 118 determines whether there is a mark representing a new station which was not displayed at the time of performing the last channel selection processing in the GPS mode but becomes appeared on the map of the display unit 76.

When it is determined that the mark representing the new station does not appear on the map of the display unit 76 in Step S210, the processing skips Step S211 and proceeds to Step S212.

when it is determined that the new station appears on the map of the display unit 76 in Step S210, that is, when the user who carries the receiving terminal 33 has moved and the present location has changed and, as a result, when the present location becomes included in the broadcasting area of the new station, the processing proceeds to Step S211, and the channel selection control unit 118 notifies the user of the existence of the new station by highlighting the mark representing the new station on the map of the display unit 76 or by outputting the sound or the like from the speaker 78. After that the processing proceeds to Step S212.

In Steps S212 and S213, the same processing as in Steps S190 and S191 of Fig. 33 is performed, and the channel selection processing in the GPS mode ends.

In the channel selection processing in the GPS mode, the same display as in the case of the channel selection processing in the map display mode described in Fig. 34 is displayed on the display unit 76.

In the selection processing in the GPS mode, the map is not displayed but simply the station list screen (Fig. 30) which displays the station names of the channel-selectable stations is displayed without displaying a map.

[Description of Computer to Which the Invention is Applied]

A series of processing in the station 32 and the receiving terminal 33 can also be executed by hardware, or by software. When a series of processing is executed by software, a program which constitutes the software is installed in a computer. Herein, examples of the computer includes a computer built in dedicated hardware, and a general-purpose personal computer which can execute various functions by installation of various programs.

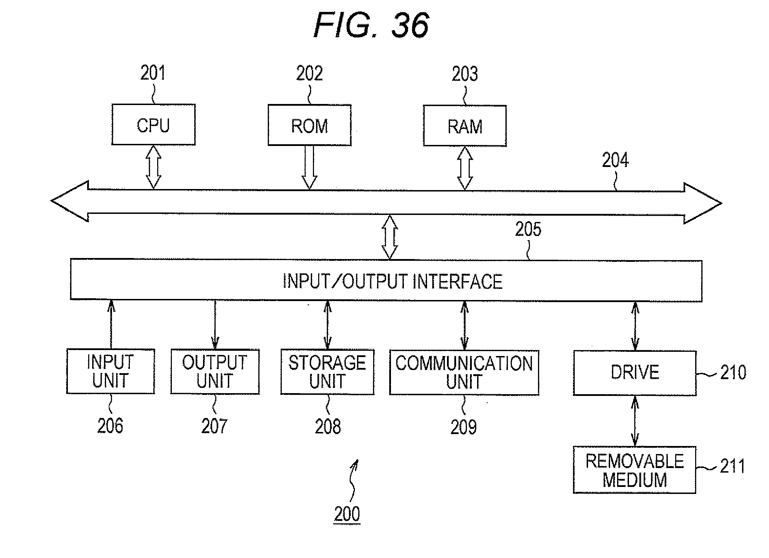

Fig. 36 is a block diagram that illustrates an example of a configuration of the hardware of a computer which executes a series of processing mentioned above using a program.

In a personal computer 200, a CPU (Central Processing Unit) 201, a ROM (Read Only Memory) 202, and a RAM (Random Access Memory) 203 are connected to one another by a bus 204.

An input/output interface 205 is further connected to the bus 204. An input unit 206, an output unit 207, a storage unit 208, a communications unit 209, and a drive 210 are connected to the input/output interface 205.

The input unit 206 includes a keyboard, a mouse, a microphone, etc. The output unit 207 includes a display, a speaker, etc. The storage unit 208 is configured as a hard disk, a nonvolatile memory, or the like. The communications unit 209 includes network interfaces, etc. The drive 210 drives a removable medium 211, such as a magnetic disk, an optical disc, a magneto-optical disc, or a semiconductor memory.

In the personal computer 200 configured as described above, when the CPU 201 loads a program stored in the storage unit 208 into the RAM 203 via the input/output interface 205 and the bus 204 and executes it, for example, so that a series of processing described above is performed.

The program to be executed by the personal computer 200 (that is, the CPU 201) can be provided, for example, as recorded in the removable medium 211 as a packaged medium, etc. Alternatively, the program can be provided via a wired or wireless transmission medium such as Vocal Area Network (LAN), the Internet, and digital satellite broadcasting.

In the personal computer 200, the program is installable into the storage unit 208 via the input/output interface 205 when the removable medium 211 is mounted in the drive 210. The program may be received by the communications unit 209 via the wired or wireless transmission medium and installed into the storage unit 208. In addition, the program may be installed in the ROM 202 or the storage unit 208 beforehand.

The program executed by a computer may be a program by which processing is performed in a time series manner according to the order of description in this specification, or may be a program by which processing is performed in parallel or individually at required timing when there is a call.

The embodiments of the present invention are not limited to the present embodiment, and various changes can be made without departing from the spirit of the invention.

That is, in the station selecting unit 117 (Fig. 23), the station information in which the current time is not contained in the area limited broadcast effective term which can be recognized from the station information can be deleted from the selectable channel list.

The area limited broadcast may be broadcast for passengers by setting the broadcasting area thereof to an interior space of a vehicle, such as a subway or a bus, for example.

In this case, as the broadcasting area information, the information which specifies a train, a bus, etc. is adopted, instead of the set of an area name or transmitting station longitude, transmitting station latitude, and transmission power, for example. As for the present location, it is necessary to acquire the information indicating an interior space of a vehicle, such as a subway and a bus specified using the broadcasting area information.

### REFERENCE SIGNS LIST

- 31: Terrestrial broadcasting station
- 32-1: through
- 32-3: Station
- 33: Receiving terminal
- 51: Pertinent information acquiring unit
- 52: Video data acquiring unit
- 53: Video encoder
- 54: Audio data acquiring unit
- 55: Audio encoder
- 56: Multiplexer
- 57: Transmitting unit
- 58, 71: Antenna
- 72: Tuner
- 73: Demultiplexer
- 74: Video decoder
- 75: Audio decoder
- 76: Display unit
- 77: Selecting unit
- 78: Display unit
- 79: Browser
- 80: Control unit
- 81: Operation unit
- 111: through
- 113: Station information acquiring unit
- 114: Registering unit
- 115: Storage unit
- 116: Updating unit
- 117: Station selecting unit
- 118: Channel selection control unit
- 201: CPU
- 202: ROM
- 203: RAM
- 204: Bus
- 205: Input/output Interface
- 206: Input unit
- 207: Output unit
- 208: Storage unit
- 209: Communications unit
- 210: Drive
- 211: Removable Medium

## Claims

1. A receiving device for one-seg broadcast, comprising:
a station information acquiring unit that acquires station information on a station containing at least broadcasting area information which is information on a broadcasting area capable of receiving a broadcast wave from the station transmitting a broadcast wave of one-seg broadcast through an arbitrary segment;
a storage unit that stores the station information;
a station selecting unit that selects a station that broadcasts receivable one-seg broadcast, as a channel-selectable station, by using the broadcasting area information;
a channel selection control unit that performs channel selection control of selecting the one-seg broadcast of the channel-selectable station; and
a registering unit that causes the station information requested to be registered by the user to be stored in the storage unit.

2. The receiving device according to claim 1,
wherein the channel selection control unit causes information on the channel-selectable station, of which the station information is stored in the storage unit, to be displayed, and causes the one-seg broadcast of a station, selected by the user using the displayed information on the channel-selectable station, to be selected.

3. The receiving device according to claim 2,
wherein the station selecting unit selects a station of the one-seg broadcast that is receivable in a local area selected by the user, as the channel-selectable station, by using the broadcasting area information included in the station information stored in the storage unit.

4. The receiving device according to claim 2,
wherein the station selecting unit acquires a present location, and selects a station of the one-seg broadcast which is receivable at the present location as the channel-selectable station, by using the broadcasting area information included in the station information stored in the storage unit.

5. The receiving device according to claim 2,
wherein the channel selection control unit performs checking for reception of whether the one-seg broadcasts by the channel-selectable stations are receivable or not, and displays information on only the channel-selectable stations of which reception of the one-seg broadcasts has been successfully confirmed.

6. The receiving device according to claim 2,
wherein the broadcasting area information included in the station information stored in the storage unit is information indicating a position of the station and information indicating transmission power of the broadcast wave transmitted by the station, and
wherein the channel selection control unit displays a mark indicating the station, at a position of the channel-selectable station on a map, by using information indicating the position of the station.

7. The receiving device according to claim 1,
wherein the station information further includes an effective term during which the station carries out the one-seg broadcast, and
wherein the receiving device further includes an updating unit that updates the station information by deleting the station information of which the effective term has expired, from among the station information stored in the storage unit.

8. The receiving device according to claim 1,
wherein the broadcasting area information is information indicating a position of the station, and information indicating transmission power of the broadcast wave by the station.

9. The receiving device according to claim 1,
wherein the station information further includes a frequency of the one-seg broadcast that is broadcast by the station corresponding to the station information, and
wherein the channel selection control unit selects the one-seg broadcast using the frequency included in the station information.

10. A receiving method comprising the steps of:
at a receiving device of one-seg broadcast,
acquiring station information on a station containing at least broadcasting area information which is information on a broadcasting area capable of receiving a broadcast wave from the station transmitting the broadcast wave of the one-seg broadcast through an arbitrary segment;
storing the station information in a storage unit;
selecting a station that broadcasts receivable one-seg broadcast as a channel-selectable station of which channels are selectable, by using the broadcasting area information; and
performing channel selection control of selecting the one-seg broadcast of the channel-selectable station,
wherein the storage unit stores the station information requested to be registered by the user.

11. A program for causing a computer to function as:
a station information acquiring unit that acquires station information on a station containing at least broadcasting area information which is information on a broadcast area capable of receiving a broadcast wave from the station transmitting the broadcast wave of one-seg broadcast through an arbitrary segment;
a storage unit that stores the station information;
a station selecting unit that selects a station that broadcasts receivable one-seg broadcast, as a channel-selectable station, by using the broadcasting area information;
a channel selection control unit that carries out channel selection control of selecting the one-seg broadcast of the channel-selectable station; and
a registering unit that causes the station information requested to be registered by the user to be stored in the storage unit.
